(19) Europäisches Patentamt
European Patent Office
Office européen des brevets

(11) **EP 3 835 806 A1**

(12) **EUROPÄISCHE PATENTANMELDUNG**

(43) Veröffentlichungstag:
**16.06.2021 Patentblatt 2021/24**

(51) Int Cl.:
*G01S 5/02* *(2010.01)*     *G01S 13/87* *(2006.01)*
*G01S 5/14* *(2006.01)*     *G01S 11/02* *(2010.01)*
*G08B 21/02* *(2006.01)*     *B25J 9/16* *(2006.01)*
*B25J 13/08* *(2006.01)*     *F16P 3/14* *(2006.01)*

(21) Anmeldenummer: **19215687.5**

(22) Anmeldetag: **12.12.2019**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
**KH MA MD TN**

(71) Anmelder: **Siemens Aktiengesellschaft**
**80333 München (DE)**

(72) Erfinder:
- **KILIAN, Lennart**
  **82131 Gauting (DE)**
- **SCHINDHELM, Corina Kim**
  **81539 München (DE)**

- **SCHWARZER, Stefan**
  **90451 Nürnberg (DE)**
- **HLADIK, Reinhard**
  **1210 Wien (AT)**
- **WAHRBICHLER, Joachim**
  **8043 Graz (AT)**
- **SCHRÖER, Guido**
  **81677 München (DE)**
- **GLÄNZER, Ulrike**
  **85579 Neubiberg (DE)**

(74) Vertreter: **Maier, Daniel Oliver**
**Siemens AG**
**Postfach 22 16 34**
**80506 München (DE)**

(54) **VERFAHREN UND SYSTEM ZUR LOKALISIERUNG EINES DRAHTLOS KOMMUNIZIERENDEN OBJEKT-TRANSPONDERS, SOWIE PERSONENSCHUTZSYSTEM**

(57)     Verfahren zur Bestimmung einer Schutzzone (S) mit einem Schutzradius um einen drahtlos kommunizierenden Objekt-Transponder (T), wobei folgende Schritte ausgeführt werden:

a) Ermitteln einer ersten, unsicheren Position des Objekt-Transponders (T) durch ein erstes Lokalisierungssystem,

b) Ermitteln von zumindest zwei sicheren Anker-Objekt-Distanzen zwischen dem Objekt-Transponder (T) und zumindest zwei Anker-Transpondern (G1-G3) mit jeweils bekannter Position nach dem TWR-Prinzip durch eine sichere Distanzmessungsvorrichtung,

c) Ermitteln des Schutzradius mittels einer fehlersicheren Rechenvorrichtung (F-CPU), welche die erste Position vom ersten Lokalisierungssystem und die zumindest zwei sicheren Anker-Objekt-Distanzen von der Distanzmessungsvorrichtung empfängt und daraus mithilfe der bekannten Positionen der zumindest zwei Anker-Transponder (G1-G3) den Schutzradius bestimmt.

FIG 1

EP 3 835 806 A1

**Beschreibung**

Die Erfindung betrifft ein Verfahren und ein System zur Lokalisierung eines drahtlos kommunizierenden Objekt-Transponders, sowie ein Personen- oder Objektschutzsystem.

In Produktionssystemen werden häufig Schutzäune zum Personenschutz eingesetzt, um beispielsweise Bedienungspersonal oder bewegte Objekte vor einem, in Betrieb befindlichen, bewegten Montage-Roboterarm zu schützen.

Schutzzäune benötigen allerdings Platz in der Produktionsanlage und können den Zugang zu Anlagen erschweren. Damit sind indirekt Produktionskosten verbunden, welche einen wirtschaftlichen Betrieb eines Produktionssystems unerwünscht beeinträchtigen.

Beispielsweise kann mit einer Laserentfernungsmessung oder visueller Erkennung mit Kameras ein virtueller Schutzzaun für gefährliche Produktionsmaschinen realisiert werden, was jedoch in der Regel sehr aufwändig, unflexibel und teuer ist.

Die Lokalisierung eines drahtlos kommunizierenden Objekt-Transponders, also die Berechnung einer absoluten Position im Raum (2D oder 3D) durch ein funkbasiertes Lokalisierungssystem mit Standardkomponenten gilt im Stand der Technik allerdings als unsicher.

Die berechnete Position kann durch Hardware- und/oder Software-Fehler der zum Einsatz kommenden Komponenten oder durch physikalische Effekte, welche beispielsweise durch den Funckanal hervorgerufen werden können, verfälscht werden.

Solche Effekte können durch Funkanäle, welche auf keiner direkten Sichtverbindung basieren, hervorgerufen werden. Durch Signalreflektionen kann es zu Mehrwegausbreitung und in weiterer Folge zum Mehrfachempfang desselben Sendesignals, jedoch mit unterschiedlichen Laufzeiten kommen.

Eine Verbesserung der Laufzeitmessung kann durch das bekannte TWR-Verfahren (englisch "Two Way Ranging", Zweiwege-Entfernungsmethode) erreicht werden. Die Zweiwege-Entfernungsmethode bestimmt die Signallaufzeit (Flugzeit) des UWB-HF-Signals und berechnet dann die Entfernung zwischen den Knoten, indem die Zeit mit der Lichtgeschwindigkeit multipliziert wird. Der TWR-Prozess wird zwischen einem Transponder und einem angeforderten Anker angewendet, es soll zu einem bestimmten Zeitpunkt nur ein Anker am TWR beteiligt sein. Unter einem Anker wird eine stationäre Funkeinheit mit bekannter Position verstanden.

Es ist jedoch derzeit kein Ortungsverfahren mithilfe eines Funksystems bekannt, mit welchem sicherheitsrelevante Aufgaben, wie beispielsweise der Verzicht auf Schutzäune bei Produktionsanlagen, realisiert werden können, da die Bestimmung insbesondere der Übertragungsparameter eines Funkkanals nicht hinreichend verlässlich ist, um beispielsweise in einem Produktionssystem eingesetzt zu werden und bei einem unerwünschten Eingriff das Produktionssystem abzuschalten und dadurch die Personen- bzw. Objektsicherheit zu gewährleisten.

Es ist Aufgabe der Erfindung ein Verfahren und ein System zur Bestimmung einer Schutzzone um einen drahtlos kommunizierenden Objekt-Transponder bereitzustellen, welches einen zuverlässigen und sicheren Schutz vor Objekten vorsieht, welche in die Schutzzone eingreifen.

Dabei kann der drahtlos kommunizierende Objekt-Transponder beispielsweise von einer Person, das heißt dem Bedienungspersonal, getragen werden. Natürlich kann auch ein Objekt, wie ein autonom fahrendes Fahrzeug mit einem Objekt-Transponder ausgestattet sein, um dieses Fahrzeug beispielsweise vor einer Kollision zu schützen.

Die Schutzzone ist eine virtuelle Zone, durch welche sichergestellt werden kann, dass bei Eingriff in diese Zone ein Schutzmechanismus aktiviert wird, beispielsweise indem des eingreifenden Objekts wie ein Roboterarm unmittelbar gestoppt wird. Mit anderen Worten beschreibt der Schutzradius der Schutzzone jenen minimalen Radius, in welcher sich der Transponder mit Sicherheit befindet, das heißt verlässlich nicht außerhalb befindet.

Dadurch können beispielsweise große Anlagen ohne Schutzäune realisiert werden, in denen gefährliche Maschinen automatisch abgeschaltet werden, wenn sich ein Arbeiter, der mit einem Objekt-Transponder ausgestattet ist, der Maschine soweit nähert, dass der Schutzradius den gefährlichen Bereich schneidet. Dies ist günstig, da nur jener Teil der Anlage mit der betroffenen Maschine und nicht die ganze Anlage von der Sicherheitsmaßnahme betroffen ist.

Eine fehlersicher arbeitende Recheneinheit (F-CPU) als sicherheitszertifizierte Komponente führt beispielweise mittels zweier unabhängiger Rechenvorrichtungen jeweils die gleichen Rechenoperationen aus, vergleicht deren Ergebnisse mit einander und stellt bei einer Übereinstimmung ein als sicher geltendes Ergebnis bereit. Eine fehlersicher arbeitende Recheneinheit kann sicherheits-relevante und nicht-sicherheitsrelevante Anwendungsprogramme ausführen und ist bis zu SIL3 gemäß IEC 61508 und Cat4 PLd gemäß ISO 13849-1 zertifiziert.

Die IEC 61508 ist eine internationale Normenserie zur Entwicklung von elektrischen, elektronischen und programmierbaren elektronischen Systemen, die eine Sicherheitsfunktion ausführen. Sie wird von der Internationalen Elektrotechnischen Kommission (IEC) herausgegeben und trägt den Titel Funktionale Sicherheit sicherheitsbezogener elektrischer/elektronischer/programmierbarer elektronischer Systeme.

Die Norm EN ISO 13849 ist eine sicherheitsspezifische Norm, welche sich mit Gestaltungsleitsätzen zu sicherheitsbezogenen Teilen von Steuerungen beschäftigt.

Die erfindungsgemäße Aufgabe wird durch ein Verfahren eingangs genannter Art gelöst, wobei folgende Schritte ausgeführt werden:

a) Ermitteln einer ersten, unsicheren Position des Objekt-Transponders durch ein erstes Lokalisierungssystem,

b) Ermitteln von zumindest zwei sicheren Anker-Objekt-Distanzen zwischen dem Objekt-Transponder und zumindest zwei Anker-Transpondern mit jeweils bekannter Position nach dem TWR-Prinzip durch eine sichere Distanzmessungsvorrichtung,

c) Ermitteln des Schutzradius mittels einer fehlersicheren Rechenvorrichtung, welche die erste Position vom ersten Lokalisierungssystem und die zumindest zwei sicheren Anker-Objekt-Distanzen von der Distanzmessungsvorrichtung empfängt und daraus mithilfe der bekannten Positionen der zumindest zwei Anker-Transponder den Schutzradius bestimmt.

Durch die erfindungsgemäße Bildung eines virtuellen Schutzzauns um den Transponder wird ein Personen- oder Objektschutz erreicht.

Natürlich ist auch der Schutz des in die Schutzzone eingreifenden Objekts, wie ein Produktionssystem, ein Aspekt, um die Sicherheit und Verfügbarkeit der gesamten Anlage zu gewährleisten.

In einer Weiterbildung der Erfindung ist es vorgesehen, dass von den zumindest zwei Anker-Objekt-Distanzen das Minimum als minimale Distanz bestimmt wird, und der jeweilige geometrische Abstand zwischen einem Anker-Transponder und der ersten Position, sowie der Differenz zu den Anker-Objekt-Distanzen jeweils ermittelt wird, und aus den Differenzen das Maximum als maximale Distanzdifferenz bestimmt wird, und der Schutzradius aus der minimalen Distanz und der maximalen Distanzdifferenz bestimmt wird.

Dadurch kann auch eine Schutzzone für den Fall mit der ungünstigsten Anordnung zwischen Transponder und Anker-Gateways bestimmt werden.

In einer Weiterbildung der Erfindung ist es vorgesehen, dass der Schutzradius $r_p$ gemäß dem Zusammenhang

$$r_p = 2 * d_{TWRmin} + delta_{max}$$

bestimmt wird.

In einer Weiterbildung der Erfindung ist es vorgesehen, dass der Schutzradius aus dem jeweiligen Abstand zwischen den zumindest zwei Anker-Objekt-Distanzen und der ersten Position ermittelt wird.

Dadurch kann der Schutzradius entsprechend der genannten Anordnung reduziert werden.

In einer Weiterbildung der Erfindung ist es vorgesehen, dass um die zumindest zwei Anker-Transponder zumindest ein erster Schnittpunkt im Abstand der jeweiligen Anker-Objekt-Distanz gebildet wird, und der Schutzradius durch den größten Abstand von dem zumindest einen ersten Schnittpunkt zur ersten Position bestimmt ist.

In einer Weiterbildung der Erfindung ist es vorgesehen, dass die Positionen der Anker-Transponder (G1-G3) eine Dreiecksfläche in einer Dreiecksebene definiert, und eine gedachte Flächennormale auf die Dreiecksebene durch die erste Position des Transponders verläuft, und der Schnittpunkt zwischen der Flächennormale und der Dreiecksebene eine projizierte Transponder-Position darstellt, welche bei der Bestimmung des Schutzradius verwendet wird, und vorzugsweise eine Mehrdeutigkeit bei der Bestimmung des Schnittpunkts des Objekt-Transponders bei zwei Anker-Transpondern durch eine Prüfung, ob eine ermittelte Position innerhalb der Dreieckfläche gelegen ist, gelöst wird.

Durch die projizierte Transponder-Position kann eine Lage des Transponders außerhalb der Dreiecksebene berücksichtigt werden.

Ferner kann eine Mehrdeutigkeit bei der Bestimmung des gebildeten Schnittpunkts mittels der sicheren Distanz auf einfache Weise gelöst werden.

In einer Weiterbildung der Erfindung ist es vorgesehen, dass folgende Schritte ausgeführt werden:

a) Erfassen von Sende- und Empfangs-Zeitstempeln für eine jeweilige Kommunikations-Nachricht seitens des Transponders und des einen Anker-Gateways,

b) Übertragen der jeweiligen Zeitstempel vom Transponder und dem einen Anker-Gateway mit zumindest einer jeweiligen Kontrollinformation an eine fehlersichere Rechenvorrichtung, wobei die Kontrollinformation vorzugsweise eine Paritätsinformation ist

c) Durchführen von zumindest einer Überprüfung durch die fehlersichere Rechenvorrichtung ausgewählt aus:

c1) Überprüfung der Richtigkeit der jeweiligen Zeitstempel anhand der zumindest einen Kontrollinformation,

c2) Überprüfung der errechneten Zeitdauer für die Bearbeitungszeiten des Transponders und jener des einen Anker-Gateways anhand bekannter Erfahrungswerte,

d) Bestimmen der sicheren Distanz mithilfe der überprüften Zeitstempel durch die fehlersichere Rechenvorrichtung.

wobei bei der Erfassung der Zeitstempel Zeitstempel-Fehler nur durch den Transponder oder alternativ nur durch das eine Anker-Gateway hervorgerufen werden.

Dadurch wird erreicht, dass die zu bestimmende Distanz fehlersicher berechnet wird, da jede Rechenoperation zur Bestimmung der Distanz in einer fehlersicher arbeitenden Rechenvorrichtung durchgeführt werden. Die Erfassung der Basisdaten, das heißt der Zeitstempel erfolgt durch den Transponder beziehungsweise die Anker-Gateways und die Übertragung der Zeitstempel wird durch eine jeweilige Kontrollinformation gesichert. Daher kann beispielsweise ein Fehler bei der Erzeugung, der Übertragung und der Berechnung festgestellt werden und eine Warnung ausgegeben werden, dass die Sicherheit einer durchgeführten Berechnung aktuell nicht sichergestellt ist.

In einer Weiterbildung der Erfindung ist es vorgesehen, dass ein Indikatorwert für eine sichere Distanzmessung durch folgenden Zusammenhang mittels der fehlersicheren Rechenvorrichtung ermittelt wird, welcher ein Maß für die Sicherheit der berechneten sicheren Distanz ist:

$$\text{safe\_twr\_value} = \frac{\left(T_{\text{Round1}} - T_{\text{GW\_REPLY}}\right) - \left(T_{\text{Round2}} - T_{\text{TAG\_REPLY}}\right)}{2}$$

wobei

$$T_{\text{Round1}} = 2 \cdot \text{TOF} + T_{\text{GW\_REPLY}}$$

$$T_{\text{Round2}} = 2 \cdot \text{TOF} + T_{\text{TAG\_REPLY}}$$

$$T_{\text{GW\_REPLY}} = TS_{\text{GW\_TX\_RESP}} - TS_{\text{GW\_RX\_POLL}}$$

$$T_{\text{TAG\_REPLY}} = TS_{\text{TAG\_TX\_FINAL}} - TS_{\text{TAG\_RX\_RESP}}$$

Dadurch kann auf eine einfache Weise festgestellt werden, dass die Erzeugung der Zeitstempel plausibel erfolgt ist.

In einer Weiterbildung der Erfindung ist es vorgesehen, dass der drahtlosen Kommunikation zwischen dem Objekt-Transponder und dem einen Anker-Gateway für eine Lokalisierungs-Abfrage eine Abfrage-, eine Antwort- und eine End-Nachricht versendet und empfangen wird.

Dadurch kann das Verfahren auf ein einfaches und bekanntes Verfahren zur Zwei-Wege-Vermessung aufbauen.

In einer Weiterbildung der Erfindung ist es vorgesehen, dass eine Vorgangsnummer von der fehlersicheren Rechenvorrichtung erzeugt wird, welche mit der Antwort-Nachricht übertragen wird.

In einer Weiterbildung der Erfindung ist es vorgesehen, dass die Vorgangsnummer eine Zufallszahl ist.

Dadurch wird die Manipulationssicherheit erhöht, da die Kenntnis der Zahl vonnöten ist, um sie einem Anker-Gateway zuordnen zu können.

In einer Weiterbildung der Erfindung ist es vorgesehen, dass die Kontrollinformation eine Paritätsinformation ist.

Dadurch wird eine technisch einfache Umsetzung erreicht, bei welcher Fehler oder Manipulationen bei der Übertragung der Zeitstempel entdeckt werden können, ohne die Zeitstempel selbst zu manipulieren, wie dies beispielsweise bei einer Verschlüsselung auftreten könnte und im Widerspruch zum erfindungsgemäßen Ansatz steht, dass Berechnungen nur von einer fehlersicheren Rechenvorrichtung ausgeführt werden.

In einer Weiterbildung der Erfindung ist es vorgesehen, dass bei der Berechnung der Kontrollinformation eine Kommunikations-Adresse des Objekt-Transponders oder des zumindest einen Anker-Gateways berücksichtigt wird.

Dadurch wird die Manipulationssicherheit weiter erhöht, da eine zusätzliche Überprüfung der im System bekannten Anker-Gateways erfolgen kann.

Die Aufgabe der Erfindung wird auch durch ein Warnsystem zur Bestimmung einer Schutzzone um einen drahtlos kommunizierenden Objekt-Transponder gelöst, umfassend eine fehlersichere Rechenvorrichtung mit einem Speicher, ein Lokalisierungssystem und zumindest zwei Anker-Transponder, wobei das Warnsystem dazu eingerichtet ist, das erfindungsgemäße Verfahren auszuführen, und die Schutzzone für den Objekt-Transponder zu bestimmen.

Die Aufgabe der Erfindung wird auch durch ein Schutzsystem für eine Person oder ein Objekt gelöst, umfassend ein Gefahrensystem und ein erfindungsgemäßes Warnsystem mit einem drahtlos kommunizierenden Objekt-Transponder, welcher von einer Person getragen wird oder von einem Objekt umfasst ist, wobei das Schutzsystem dazu eingerichtet ist, wenn sich das Gefahrensystem in Betrieb befindet, mithilfe der von dem Warnsystem ermittelten Schutzzone (S) für den Objekt-Transponder für zumindest jenen Teil des Gefahrensystems einen Abbruchvorgang des Betriebs des Gefahrensystems auszulösen, dessen Teil in die Schutzzone eingreift.

In einer Weiterbildung der Erfindung ist es vorgesehen, dass das Gefahrensystem ein industrielles Produktionssystem mit beweglichen Teilsystemen, wie Montage-Robotern, ist.

In einer Weiterbildung der Erfindung ist das Schutzsystem für ein Fahrzeug vorgesehen, umfassend ein Gefahrensystem und ein erfindungsgemäßes Warnsystem mit einem drahtlos kommunizierenden Objekt-Transponder, welcher von dem Fahrzeug umfasst ist, und welches Fahrzeug eine Fortbewegung ausführt, wobei das Schutzsystem dazu eingerichtet ist, mithilfe der von dem Warnsystem ermittelten Schutzzone für den Objekt-Transponder des Fahrzeugs einen Abbruchvorgang der Fortbewegung auszulösen, sofern das Gefahrensystem in die Schutzzone eingreift.

In einer Weiterbildung der Erfindung ist es vorgesehen, dass das Gefahrensystem ein statisches Infrastrukturobjekt, beispielsweise ein Gebäude, ist, und der Objekt-Transponder von einem Fahrzeug, beispielsweise ein Kraftfahrzeug, oder von einem fliegenden Verkehrsobjekt, beispielsweise ein Hubschrauber oder eine Drohne zur Personen- oder Güterbeförderung, umfasst ist.

Die Erfindung wird nachfolgend anhand von in den beigeschlossenen Zeichnungen dargestellten Ausführungsbeispiele näher erläutert. In den Zeichnungen zeigt:

Fig. 1 ein Ausführungsbeispiel für ein erfindungsgemäßes Warn- und Schutzsystem,

Fig. 2 ein Beispiel für ein Ablaufdiagramm zur sicheren Bestimmung der Distanz,

Fig. 3 ein Beispiel für eine Abfrage-Nachricht,

Fig. 4 ein Beispiel für eine TWR-Antwort-Nachricht,

Fig. 5 ein Beispiel für eine Antwort-Nachricht,

Fig. 6 ein Beispiel für eine TWR-End-Nachricht,

Fig. 7 ein Beispiel für eine End-Nachricht,

Fig. 8 ein Beispiel für eine Anordnung in Aufsicht mit einem zu lokalisierenden Objekt-Transponder und drei Gateway-Transpondern,

Fig. 9 die Anordnung der Fig. 8 mit eingezeichneten, bekannten Distanzen,

Fig. 10 ein Ausführungsbeispiel für ein Flussdiagramm des erfindungsgemäßen Verfahrens,

Fig. 11 eine Darstellung der Distanzen und der dazugehörigen Laufzeiten gemäß dem Beispiel der Fig. 8,

Fig. 12 eine Darstellung des geometrischen Zusammenhangs mit einem Berechnungsbeispiel des Schutzradius mit optimaler Größe,

Fig. 13 eine Darstellung des geometrischen Zusammenhangs mit einem Berechnungsbeispiel des Schutzradius, welcher größer als erforderlich ist,

Fig. 14-15 weitere Beispiele für den geometrischen Zusammenhang von Distanzen bei der Bestimmung des Schutzradius,

Fig. 16 eine Sektor-Darstellung um eine Position zur FCSBestimmung,

Fig. 17-19    Beispiele für eine Sektor-Darstellung von, für Gateways ermittelten Richtungen mit dazugehörigen Distanzen,

Fig. 20    ein Beispiel für eine Sektor-Darstellung mit einer ungünstigen Position des Objekt-Transponders,

Fig. 21    eine Illustration der berechneten Distanzen gemäß dem Beispiel der Fig. 20,

Fig. 22    ein Beispiel für eine Sektor-Darstellung mit einer günstigen Position des Objekt-Transponders,

Fig. 23    eine Illustration der berechneten Distanzen gemäß dem Beispiel der Fig. 22,

Fig. 24-26    eine Darstellung des geometrischen Zusammenhangs von verschiedenen Abständen für eine Anordnung analog zu Fig. 20 und Fig. 21,

Fig. 27-29    eine Darstellung des geometrischen Zusammenhangs für den Schutzradius dar für verschiedene Konfigurationen.

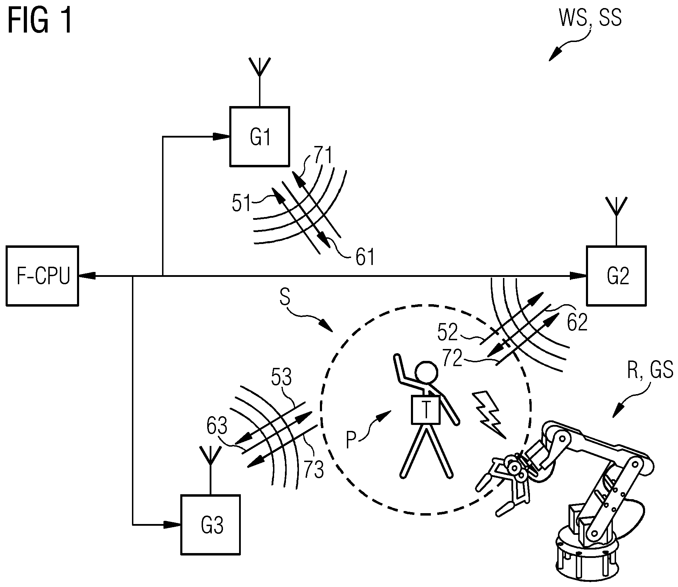

In **Fig. 1** ist ein Ausführungsbeispiel für ein erfindungsgemäßes Warn- und Schutzsystem dargestellt.

Von einem Objekt-Transponder oder "Tag" T, welcher beispielsweise von einer Person P am Körper getragen wird, wird ein jeweiliges Abfrage-Signal P1-P3 in einen Funkkanal abgestrahlt, welches eine Abfrage Nachricht MP (englisch "Poll") umfasst.

Das jeweilige Abfrage-Signal P1-P3 wird vom jeweiligen Gateway G1-G3 vom Funkkanal empfangen, weiterverarbeitet und als jeweiliges Antwort-Signal R1-R3 wieder abgestrahlt, welches eine jeweilige Antwort-Nachricht MR (englisch "response") umfasst.

Die Antwort-Signale R1-R3 werden vom Objekt-Transponder T empfangen, weiterverarbeitet und als jeweiliges End-Signal F1-F3 wieder in den Funkkanal abgestrahlt, welches die jeweilige Antwort-Nachricht MF (englisch "final") umfasst.

Die End-Signale F1-F3 werden vom jeweiligen Gateway G1-G3 empfangen und an eine fehlersicher rechnende Rechenvorrichtung F-CPU übergeben, welche den Schutzradius $r_P$ einer Schutzzone S bestimmt.

Wenn sich ein Gefahrensystem beispielsweise in Form einer Produktionsanlage in Betrieb befindet, und dabei ein Roboterarm R der Produktionsanlage in die Schutzzone S eingreift, wird für den Roboterarm ein Abbruchvorgang für dessen Betrieb ausgelöst, wodurch der Roboterarm unverzüglich zum Stillstand kommt.

Der Eingriff in die Schutzzone S kann beispielsweise dadurch erfolgen, dass sich die Person P dem Roboterarm R unerlaubt nahe annähert, und der Personenschutz nicht mehr sicher gewährleistet ist.

Ein Verfahren zur Bestimmung einer sicheren Distanz $d_{TWR}$ nach dem TWR-Prinzip zwischen einem drahtlos kommunizierenden Objekt-Transponder T und zumindest einem Anker-Gateway G1-G3, welche jeweils Mittel zur Erfassung von Zeitstempeln aufweisen, wird im Weiteren anhand eines Ausführungsbeispiels der Erfindung beschrieben.

Allgemein werden dabei folgende Schritte ausgeführt:

a) Erfassen von Sende- und Empfangs-Zeitstempeln $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ für eine jeweilige Kommunikations-Nachricht seitens des Transponders T und des zumindest einen Anker-Gateways GI-G3,

b) Übertragen der jeweiligen Zeitstempel $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ vom Transponders T und dem zumindest einen Anker-Gateway G1-G3 mit zumindest einer jeweiligen Kontrollinformation CRC1, CRC2, beispielsweise eine Paritätsinformation, an eine fehlersichere Rechenvorrichtung F-CPU,

c) Durchführen von zumindest einer Überprüfung durch die fehlersichere Rechenvorrichtung (F-CPU) ausgewählt aus:

c1) Überprüfung der Richtigkeit der jeweiligen Zeitstempel $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ anhand der zumindest einen Kontrollinformation CRC1, CRC2,

c2) Überprüfung der errechneten Zeitdauer für die Bearbeitungszeiten des Transponders T und jener des zumindest einen Anker-Gateways G1-G3 anhand bekannter Erfahrungswerte,

d) Bestimmen der sicheren Distanz $d_{TWR}$ mithilfe der überprüften Zeitstempel $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ durch die fehlersichere Rechenvorrichtung F-CPU,

wobei bei der Erfassung der Zeitstempel $TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$ Zeitstempel-Fehler nur durch den Transponder T oder alternativ nur durch das zumindest eine Anker-Gateway G1-G3 hervorgerufen werden.

Daraus kann ein Indikatorwert safe_twr_value für eine sichere Distanzmessung durch folgenden Zusammenhang mittels der fehlersicheren Rechenvorrichtung F-CPU ermittelt wird, welcher ein Maß für die Sicherheit der berechneten sicheren Distanz $d_{TWR}$ ist:

$$ \text{safe\_twr\_value} = \frac{\left( T_{Round1} - T_{GW\_REPLY} \right) - \left( T_{Round2} - T_{TAG\_REPLY} \right)}{2} $$

wobei

$$ T_{Round1} = 2 \cdot TOF + T_{GW\_REPLY} $$

$$ T_{Round2} = 2 \cdot TOF + T_{TAG\_REPLY} $$

$$ T_{GW\_REPLY} = TS_{GW\_TX\_RESP} - TS_{GW\_RX\_POLL} $$

$$ T_{TAG\_REPLY} = TS_{TAG\_TX\_FINAL} - TS_{TAG\_RX\_RESP} $$

Während der drahtlosen Kommunikation wird zwischen dem Objekt-Transponder T und dem zumindest einen Anker-Gateway Gl-G3 für eine Lokalisierungs-Abfrage eine Abfrage-, eine Antwort- und eine End-Nachricht MP, MR, MF versendet und empfangen.

Außerdem kann eine Vorgangsnummer RNR von der fehlersicheren Rechenvorrichtung F-CPU erzeugt werden, welche mit der Antwort-Nachricht MR übertragen wird. Die Vorgangsnummer RNR ist beispielsweise eine Zufallszahl.

Bei der Berechnung der Kontrollinformation CRC1, CRC2 kann ferner eine Adresse des Objekt-Transponder T oder des zumindest einen Anker-Gateway G1-G3 berücksichtigt werden.

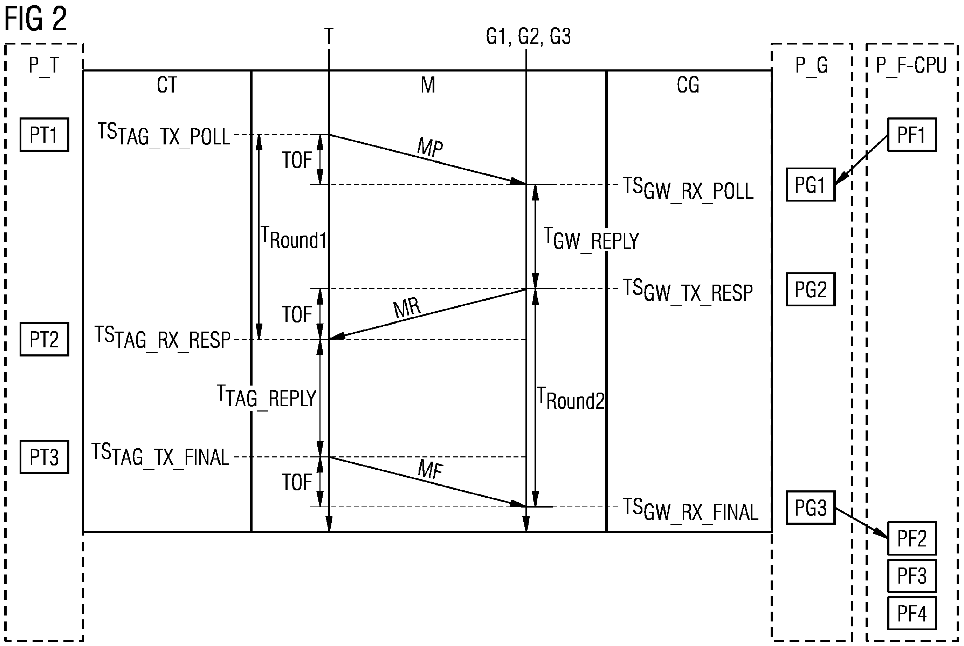

Fig. 2 stellt ein Beispiel für ein Ablaufdiagramm zur Bestimmung der sicheren Distanz $d_{TWR}$ dar, anhand dessen die Erfindung im Detail beschrieben wird.

Eine sichere Distanz ist eine Entfernung, welche ohne systemische Fehler bei einer Laufzeitmessung ermittelt wird. Unerwünschte Einflüsse, beispielsweise durch eine schwankende oder ungenaue Zeitbasis, welche bei einer Laufzeitmessung von Signalen auftreten können, werden durch eine entsprechende "sichere" Berechnung systemisch ausgeschlossen.

Die Position des Objekt-Transponders T (auch englisch "tag") in einem dreidimensionalen Raum soll gemäß den weiteren Ausführungen ermittelt werden, wobei die Anker- beziehungsweise Gateway-Transponder G1, G2, G3 mit bekannter Position herangezogen werden.

Die Abfragenachricht MP wird am Transponder T beziehungsweise Tag zu einem Zeitpunkt mit einem Zeitstempel $TS_{TAG\_TX\_POLL}$ abgesendet und am jeweiligen Anker-Gateway G1-G3 zu einem Zeitpunkt mit einem Zeitstempel $TS_{GW\_RX\_POLL}$ empfangen.

Die Übertragung der Abfragenachricht MP im Funkkanal zwischen dem Transponder T und dem jeweiligen Gateway der drei Gateways G1-G3 benötigt eine Dauer $TOF_1$ (englisch "time-offlight").

Die Abfragenachricht MP wird vom Anker-Gateway innerhalb einer Zeitspanne $T_{GW\_REPLY}$ verarbeitet und eine entsprechende Antwortnachricht MR vom Anker-Gateway zum Transponder T zu einem Zeitpunkt mit einem Zeitstempel $TS_{GW\_TX\_RESP}$ gesendet und am Tag zu einem Zeitpunkt mit einem Zeitstempel $TS_{TAG\_RX\_RESP}$ empfangen.

Die Zeitspanne $T_{GW\_REPLY}$ wird durch den Takt des Gateway-Komponenten $T_{GW\_CLK}$ bestimmt und ist innerhalb gewisser und bekannter Grenzen bekannt.

Somit kann angegeben werden:

$$T_{\mathrm{GW\_REPLY}} = TS_{\mathrm{GW\_TX\_RESP}} - TS_{\mathrm{GW\_RX\_POLL}}$$

Die Zeitspanne $T_{\mathrm{Round1}}$ bezeichnet die Signallaufzeit zwischen dem Zeitstempel $TS_{\mathrm{TAG\_TX\_POLL}}$ und dem Zeitstempel $TS_{\mathrm{TAG\_RX\_RESP}}$.

$$T_{\mathrm{Round1}} = TS_{\mathrm{TAG\_RX\_RESP}} - TS_{\mathrm{TAG\_TX\_POLL}}$$

Die Übertragung im Funkkanal benötigt die Dauer $TOF_2$. Falls der Transponder T nicht bewegt wurde, entspricht $TOF_1 = TOF_2$.

Die Antwortnachricht MR wird vom Tag innerhalb einer Zeitspanne $T_{\mathrm{TAG\_REPLY}}$ verarbeitet und eine entsprechende Endnachricht MF vom Anker-Gateway zum Transponder T zu einem Zeitpunkt mit einem Zeitstempel $TS_{\mathrm{TAG\_TX\_FINAL}}$ gesendet.

Die Zeitspanne $T_{\mathrm{TAG\_REPLY}}$ wird durch den Takt des Gateway-Komponenten $T_{\mathrm{TAG\_CLK}}$ bestimmt und ist innerhalb gewisser und bekannter Grenzen bekannt.

Die Übertragung im Funkkanal benötigt die Dauer $TOF_3$. Falls der Transponder T nicht bewegt wurde, entspricht $TOF_1 = TOF_2 = TOF_3$.

Das Anker-Gateway empfängt die Endnachricht MF zu einem Zeitpunkt mit einem Zeitstempel $TS_{\mathrm{GW\_RX\_FINAL}}$.

Die Zeitspanne $T_{\mathrm{Round2}}$ bezeichnet die Signallaufzeit zwischen dem Zeitstempel $TS_{\mathrm{GW\_TX\_RESP}}$ und dem Zeitstempel $TS_{\mathrm{GW\_RX\_FINAL}}$.

$$T_{\mathrm{Round2}} = TS_{\mathrm{GW\_RX\_FINAL}} - TS_{\mathrm{GW\_TX\_RESP}}$$

Somit kann angegeben werden:

$$T_{\mathrm{TAG\_REPLY}} = TS_{\mathrm{TAG\_TX\_FINAL}} - TS_{\mathrm{TAG\_RX\_RESP}}$$

Die Zeitstempel werden von einem Tag-Zähler CT im Objekt-Transponder beziehungsweise einem Gateway-Zähler CG im Anker-Transponder erfasst.

Aus den ermittelten Laufzeiten kann die Signallaufzeit im Funkkanal $TOF = TOF_1 = TOF_2 = TOF_3$ und über die Lichtgeschwindigkeit c die entsprechende Distanz $d_{\mathrm{TWR}}$ bestimmt werden.

$$TOF = \frac{T_{\mathrm{Round1}} \cdot T_{\mathrm{Round2}} - T_{\mathrm{GW\_REPLY}} \cdot T_{\mathrm{TAG\_REPLY}}}{T_{\mathrm{Round1}} + T_{\mathrm{Round2}} + T_{\mathrm{GW\_REPLY}} + T_{\mathrm{TAG\_REPLY}}}$$

$$d_{\mathrm{TWR}} = c \cdot TOF$$

Die Rechenvorrichtung F-CPU kann nun einen ersten Fehler erkennen, sofern die für die Distanzberechnung benötigten Zeitstempel des Transponders und der Gateways falsifiziert werden.

Dabei wird angenommen, dass nur Fehler seitens des Transponders T oder alternativ nur Fehler seitens eines der Gateways G1-G3 zur selben Zeit passieren, und nicht Fehler seitens des Transponder und eines Gateways gleichzeitig.

Unter einem systemischen Fehler wird ein Fehler verstanden, welcher die Erzeugung oder Erfassung von Zeitstempeln ungünstig beeinflusst, beispielsweise eine unerwünscht abweichende Zeitbasis in einem elektronischen Bauteil, welche durch wechselnde Temperatur, Alterung, Bauteiltoleranzen oder ähnliches hervorgerufen werden kann. Ein solcher Fehler kann zwischen einzelnen Komponenten in einem System, wie dem Transponder T und einem Gateway G1-G3 auftreten, indem sich eine lokale Zeitbasis in Form einer Takterzeugung für eine digitale Elektronikschaltung ungleichmäßig verändert.

Zeitstempel oder eine Drift eines jeweiligen Zeitgeber-Takts in einer Komponente wie dem Transponder TI oder den Gateways G1-G3 sind voneinander unabhängig. Folglich beeinflusst ein Fehler nur den eigenen Zeitstempel und nicht jenen der anderen Komponenten.

TWR verfügt über eine integrierte Fehlererkennung. Dabei wird von folgenden Zusammenhängen ausgegangen:

$$T_{Round1} = 2 \cdot TOF + T_{GW\_REPLY}$$

$$T_{Round2} = 2 \cdot TOF + T_{TAG\_REPLY}$$

Eine Abweichung von TOF durch Fehler im Transponder oder im Gateway kann nun berechnet werden durch

$$safe\_twr\_value = \frac{\left(T_{Round1} - T_{GW\_REPLY}\right) - \left(T_{Round2} - T_{TAG\_REPLY}\right)}{2}$$

Ein TWR-Ergebnis ist für $safe_{twr_{value}}$ < safe_twr_value_limit mit safe_twr_value_limit = 825 ps gültig, ansonsten ist das Ergebnis ungültig.

Mit dem Wert safe_twr_value_limit = 825 ps ist eine Takt-Drift für den Transponder mit < $\pm$200ppm beschränkt.

In der Figur ist ferner ein Programm P_T des Transponders T mit Verfahrensschritten PT1-PT3 für den Transponder T als Teil des Ablaufdiagramms vereinfacht dargestellt.

Außerdem ist ein Programm P_G eines jeweiligen Gateways G1-G3 mit Verfahrensschritten PG1-PG3 für das jeweilige Gateway G1-G3 erkennbar, sowie ein Programm P_F der fehlersicher rechnenden Vorrichtung F-CPU mit Verfahrensschritten PF1-PF4 für die Rechenvorrichtung F-CPU.

Im Schritt PT1 wird die Abfrage-Nachricht MP durch den Transponder T initiiert und gesendet.

Das jeweilige Gateway empfängt im Schritt PG1 die Abfrage-Nachricht MP und bestimmt den Sendezeitpunkt für die Antwortnachricht MR.

Im Schritt PF1 wird eine Zufallszahl RNR durch die fehlersicher rechnende Vorrichtung F-CPU erzeugt und an das jeweilige Gateway gesendet.

Das Gateway sendet eine Antwort-Nachricht MR im Schritt PG2 an den Transponder T, welche die Zufallszahl RNR enthält.

Die Antwort-Nachricht MR wird im Schritt PT2 durch den Transponder T empfangen und der Sendezeitpunkt für die End-Nachricht MF errechnet.

Der Transponder T bestimmt im Schritt PT3 aus den Zeitstempeln und der Adresse des Transponders T, und der Zufallszahl eine erste Prüfsumme CRC1 und sendet eine End-Nachricht MF vom Transponder T an das Gateway, welche die erste Prüfsumme CRC1 enthält.

Im Schritt PG3 empfängt das Gateway die End-Nachricht MF und bestimmt aus den Zeitstempeln und der Adresse des Gateways und der ersten Prüfsumme CRC1 eine zweite Prüfsumme CRC2 und übermittelt die Zeitstempel und die Adresse des Gateways und des Transponders T, sowie die zweite Prüfsumme CRC2 an die Vorrichtung F-CPU.

Im Schritt PF2 errechnet die Vorrichtung F-CPU eine dritte Prüfsumme CRC3 und vergleicht sie mit der zweiten Prüfsumme CRC2.

Im Schritt PF3 errechnet die Vorrichtung F-CPU einen sicheren Wert safe_twr_value für die Entfernung zwischen dem Gateway und dem Transponder T mittels des TWR-Verfahrens und überprüft die Werte auf Plausibilität.

Im Schritt PF4 errechnet die Vorrichtung F-CPU die gesuchte sichere Distanz anhand des vorhergehenden Zusammenhangs hinsichtlich der Signallaufzeit im Funkkanal TOF.

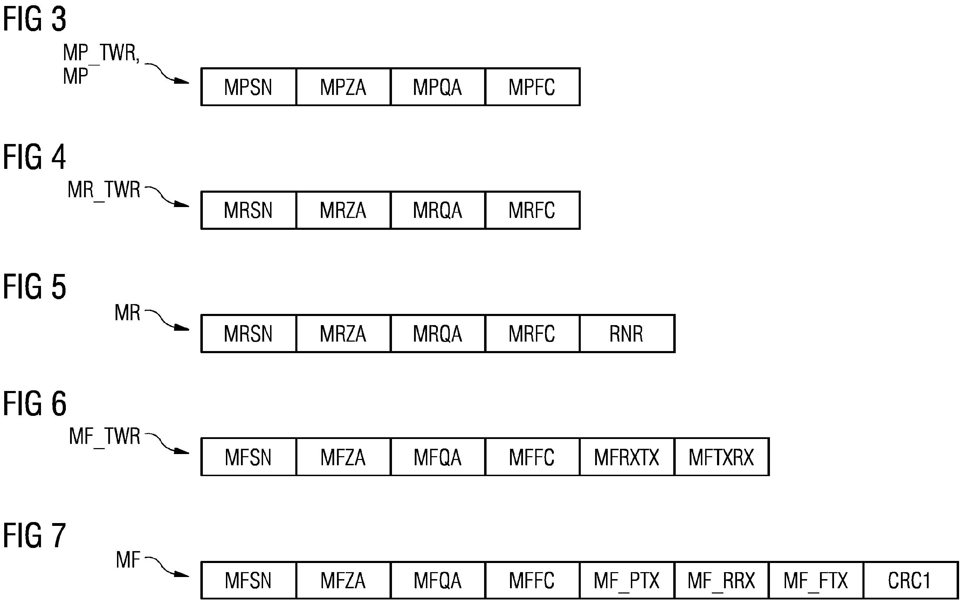

**Fig. 3** stellt beispielhaft eine Abfrage-Nachricht MP_TWR nach dem Stand der Technik für TWR dar, welche Datenelemente für eine Sequenznummer MPSN, eine Ziel-Adresse MPZA, eine Quell-Adresse MPQA und einen Funktions-Code MPFC umfasst, und beispielsweise auch als Abfrage-Nachricht MP im erfindungsgemäßen Verfahren verwendet werden kann.

**Fig. 4** stellt beispielhaft eine Antwort-Nachricht MR_TWR nach dem Stand der Technik für TWR dar, welche Datenelemente für eine Sequenznummer MRSN, eine Ziel-Adresse MRZA, eine Quell-Adresse MRQA und einen Funktions-Code MRFC umfasst.

**Fig. 5** stellt beispielhaft die erfindungsgemäße Antwort-Nachricht MR dar, welche Datenelemente für eine Sequenznummer MRSN, eine Ziel-Adresse MRZA, eine Quell-Adresse MRQA und einen Funktions-Code MRFC umfasst. Der Funktions-Code MRFC kann sich vom Stand der Technik unterscheiden.

Zusätzlich ist die Zufallszahl RNR enthalten.

**Fig. 6** stellt beispielhaft die End-Nachricht MF nach dem Stand der Technik für TWR dar, welche Datenelemente für eine Sequenznummer MFSN, eine Ziel-Adresse MFZA, eine Quell-Adresse MFQA und einen Funktions-Code MFFC umfasst. Der Funktions-Code MFFC kann sich von jenem aus dem Stand der Technik unterscheiden.

Zusätzlich weist die End-Nachricht MF ein Datenelement für eine Zeitdifferenz MFRXTX auf, welche die Zeitdauer zwischen dem Absenden der Abfrage-Nachricht MP und dem Empfangen der Antwort-Nachricht MR seitens des Transponders T bezeichnet.

Außerdem weist die End-Nachricht MF ein Datenelement für eine Zeitdifferenz MFTXRX auf, welche die Zeitdauer zwischen dem Empfangen der Antwort-Nachricht MR und dem Absenden der End-Nachricht MF seitens des Transponders T bezeichnet.

**Fig. 7** stellt beispielhaft die erfindungsgemäße End-Nachricht MP dar, welche Datenelemente für eine Sequenznummer MPSN, eine Ziel-Adresse MPZA, eine Quell-Adresse MPQA und einen Funktions-Code MPFC umfasst. Der Funktions-Code MFFC kann sich von jenem aus dem Stand der Technik unterscheiden.

Die End-Nachricht MP enthält ferner jeweils ein Datenelement in Form eines Zeitstempels für einen Abfrage-Sendezeitpunkt MF_PTX, einen Antwort Empfangszeitpunkt MF_RRX, sowie einen End-Sendezeitpunkt MF_FTX. Außerdem weist die End-Nachricht MP die erste Prüfsumme CRC1 auf, welche über die Zeitstempel des Transponders T und über die Zufallszahl RNR gebildet ist.

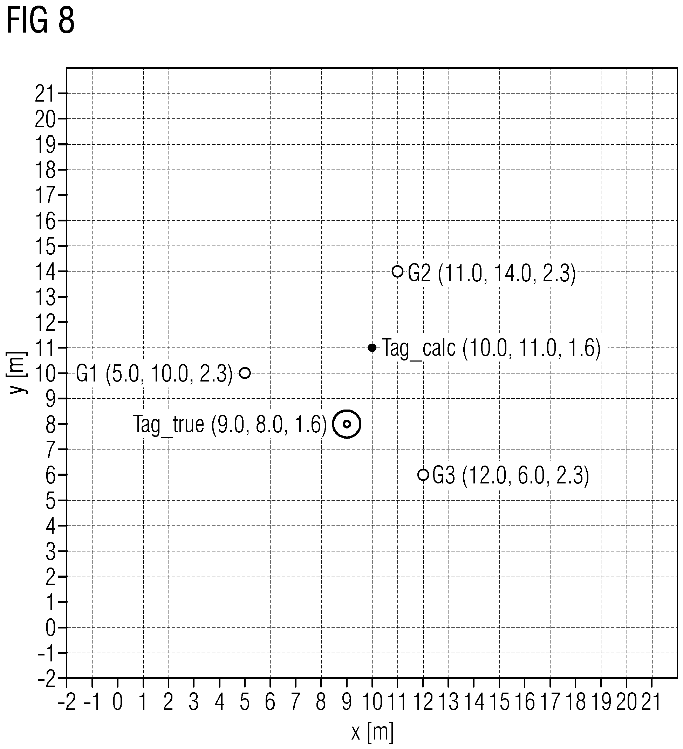

**Fig. 8** zeigt ein Beispiel einer dreidimensionalen Anordnung mit einem zu lokalisierenden Objekt-Transponder T (auch englisch "tag") und drei Anker- beziehungsweise Gateway-Transpondern G1, G2, G3 mit bekannter Position in einer zweidimensionalen Aufsicht-Darstellung.

Die Anker- bzw. Gateway-Transponder sind an folgenden Koordinaten angeordnet:

Tabelle 1: Positionen der Anker-Transponder

| Gateway-Transponder | x-Position [m] | y-Position [m] | z-Position [m] |
|---|---|---|---|
| G1 | 5.0 | 10.0 | 2.3 |
| G2 | 11.0 | 14.0 | 2.3 |
| G3 | 12.0 | 6.0 | 2.3 |

Die Gateway-Transponder G1-G3 sind alle in derselben Ebene bei 2.3m angeordnet. Es ist jedoch auch klar, dass auch im dreidimensionalen Raum eine Anordnung der Objekt-Transponder T und G1-G3 möglich ist, für welche die weiteren Ausführungen dementsprechend angewandt werden können.

Dabei muss eine entsprechende Transformation mittels einer Flächennormalen des Transponders T in jene Dreiecksebene beziehungsweise Dreiecksfläche durchgeführt werden, welche durch drei Anker-Gateways G1-G3 aufgespannt wird. Für geringe Abstände zwischen der Dreiecksebene und einem davon beanstandeten Transponder T kann jedoch diese Transformation vernachlässigt werden.

Mit bekannten Verfahren kann eine Positionsbestimmung des Objekt-Transponders T beispielsweise an der Position Tag_calc (10.0,11.0,1.6) erfolgen, wobei in diesem Beispiel die tatsächliche Position Tag_true (9.0,8.0,1.6) beträgt.

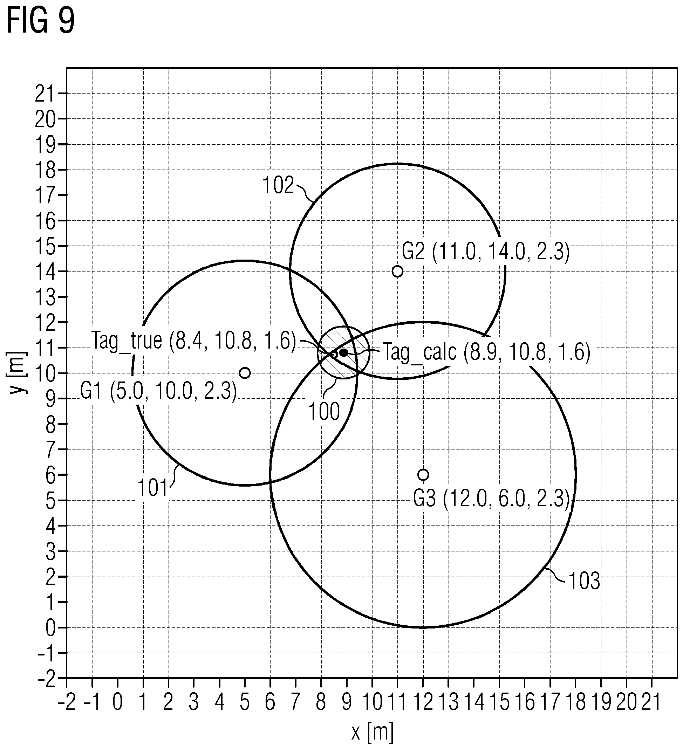

**Fig. 9** zeigt die Anordnung der Fig. 8, in welcher zusätzlich jene Distanzen in Form von Kreisen 101-103 um die Position des entsprechenden Gateways G1-G3 eingezeichnet sind, welche fehlersicher mittels der fehlersicher rechnenden Rechenvorrichtung F-CPU bestimmt werden können.

Diese Distanzmessungen werden einer zeitlichen Latenzkontrolle unterzogen, beispielsweise durch ein "Challenge Response"-Verfahren.

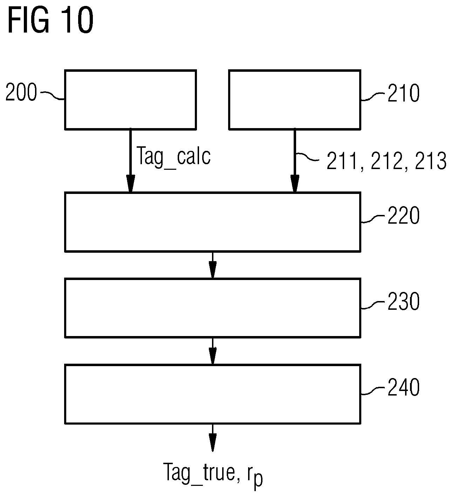

**Fig. 10** ein Ausführungsbeispiel für ein Flussdiagramm des erfindungsgemäßen Verfahrens.

Ein unabhängiges Lokalisierungssystem führt beispielsweise mittel dem TDoA-Verfahren (englisch "Time Difference of Arrival", TDoA) eine unsichere Berechnung 200 aus und ermittelt eine unsicher berechnete Position Tag_calc am Ort (x,y,z).

Diese errechnete Position kann beispielsweise durch Fehler im Algorithmus oder in der zugrunde liegenden Rechenvorrichtung, wie Rundungsfehler oder ungenaue Berechnungen, hervorgerufen werden. Außerdem können physikalische Effekte, wie Mehrwegausbreitung oder unerwünschte Reflexionen des Funksignals zu Fehlern führen. Dadurch kann die berechnete Position Tag_calc am Ort $(x_{calc}, y_{calc})$ von der tatsächlichen Position Tag_true am Ort $(x_{true}, y_{true})$ des Objekt-Transponders T abweichen.

Eine falsche Position wird dadurch definiert, wenn die berechnete Position um mehr als die angegebene Genauigkeit des Lokalisierungssystems von der tatsächlichen Position des Objekt-Transponders T abweicht. Diese Genauigkeit kann beispielsweise bei einem Ultra-Wide-Band-basierten Lokalisierungssystem etwa 30 cm betragen.

$$\text{Fehler} = \sqrt{(x_{calc} - x_{true})^2 + (y_{calc} - y_{true})^2}$$

Die fehlersicher rechnenden Rechenvorrichtung F-CPU führt eine fehlersichere Berechnung 210 von Distanzmessungen mit bekannter Latenz aus und ermittelt fehlersicher berechnete Distanzen 211-213.

Es werden Tupel (d$_{Gn}$,x$_{Gn}$,y$_{Gn}$,Latenz$_{Gn}$) für jedes Gateway G1-G3, also für n = 1..3 erzeugt.

Die unsicher berechnete Position 201 und die fehlersicher berechneten Distanzen 211-213 werden durch eine Mehrdeutigkeitsbewertung 220 dahingehend geprüft und bewertet, ob Mehrdeutigkeiten möglich sind.

Anschließend erfolgt eine Berechnung 230 eines Schutzradius r$_P$. Der Schutzradius r$_P$ beschreibt eine Schutzzone, in welcher sich der Objekt-Transponder T sicher befindet.

Um die Berechnung des Schutzradius 240 durchführen zu können, werden auf Funkortungsbasis Distanzen zwischen den stationär festen Ankern bzw. Gateways und dem Objekt-Transponder T bestimmt.

Allgemein können folgende Verfahrensschritte zur Bestimmung einer Schutzzone S mit einem Schutzradius r$_p$ um einen drahtlos kommunizierenden Objekt-Transponder T angegeben werden:

a) Ermitteln einer ersten, unsicheren Position Tag_calc des Objekt-Transponders T durch ein erstes Lokalisierungssystem,

b) Ermitteln von zumindest zwei, in diesem Beispiel drei, sicheren Anker-Objekt-Distanzen d$_{TWR\_G1}$, d$_{TWR\_G2}$, d$_{TWR\_G3}$ zwischen dem Objekt-Transponder T und zumindest zwei, in diesem Beispiel drei, Anker-Transpondern G1-G3 mit jeweils bekannter Position nach dem TWR-Prinzip durch eine sichere Distanzmessungsvorrichtung,

c) Ermitteln des Schutzradius r$_p$ mittels einer fehlersicheren Rechenvorrichtung F-CPU, welche die erste Position Tag_calc vom ersten Lokalisierungssystem und die zumindest zwei sicheren Anker-Objekt-Distanzen d$_{TWR\_G1}$, d$_{TWR\_G2}$, d$_{TWR\_G3}$ von der Distanzmessungsvorrichtung empfängt und daraus mithilfe der bekannten Positionen der zumindest zwei Anker-Transponder G1-G3 den Schutzradius r$_p$ bestimmt.

Es werden drei Anker-Objekt-Distanzen d$_{TWR\_G1}$, d$_{TWR\_G2}$, d$_{TWR\_G3}$ ermittelt, und deren Minimum als minimale Distanz d$_{TWRmin}$ bestimmt.

Es wird ferner der jeweilige geometrische Abstand zwischen einem Anker-Transponder G1-G3 und der ersten Position Tag_calc, sowie der Differenz zu den Anker-Objekt-Distanzen jeweils ermittelt, und aus den Differenzen das Maximum als maximale Distanzdifferenz delta$_{max}$ bestimmt.

Der Schutzradius r$_p$ wird aus der minimalen Distanz (d$_{TWRmin}$) und der maximalen Distanzdifferenz (delta$_{max}$) gemäß dem Zusammenhang

$$r_p = 2 * d_{TWRmin} + delta_{max}$$

bestimmt.

Die Positionen der Anker-Transponder G1-G3 definieren eine Dreiecksfläche in einer Dreiecksebene.

Liegt der Transponder T nicht in der Dreiecksebene, verläuft durch die erste Position Tag_calc des Transponders (T) eine gedachte Flächennormale auf die Dreiecksebene.

Der Schnittpunkt zwischen der Flächennormale und der Dreiecksebene stellt eine projizierte Transponder-Position dar, welche bei der Bestimmung des Schutzradius r$_p$ verwendet wird.

Aufgrund der geometrischen Anordnung in Bezug auf die unsichere Position Tag_calc wird aus zwei der gemessenen Anker-Objekt-Distanzen d$_{TWR\_G1}$, d$_{TWR\_G2}$, d$_{TWR\_G3}$, ein Schnittpunkt ermittelt.

Eine Mehrdeutigkeit bei der Bestimmung des Schnittpunkts des Objekt-Transponders T bei zwei Anker-Transpondern G1-G3 wird durch eine Prüfung, ob eine ermittelte Position innerhalb der Dreieckfläche gelegen ist, gelöst.

Die Mehrdeutigkeit kann auch durch Zuhilfenahme eines dritten Anker-Transponder aufgelöst werden.

Wenn die Flächennormale auf oder außerhalb der Dreiecksfläche gelegen ist, wird der ermittelte Schutzradius um die maximale Distanzdifferenz delta$_{max}$ vergrößert.

Die sicheren Anker-Objekt-Distanzen d$_{TWR\_G1}$, d$_{TWR\_G2}$, d$_{TWR\_G3}$ zwischen dem Objekt-Transponder T und einem Anker-Transponder G1-G3 mit bekannter Position nach dem TWR-Prinzip kann durch die zuvor beschriebene sichere Distanzmessungsvorrichtung erfolgen, wobei der Objekt-Transponder T sowie das Anker-Gateway G1-G3 jeweils Mittel zur Erfassung von Zeitstempeln aufweisen.

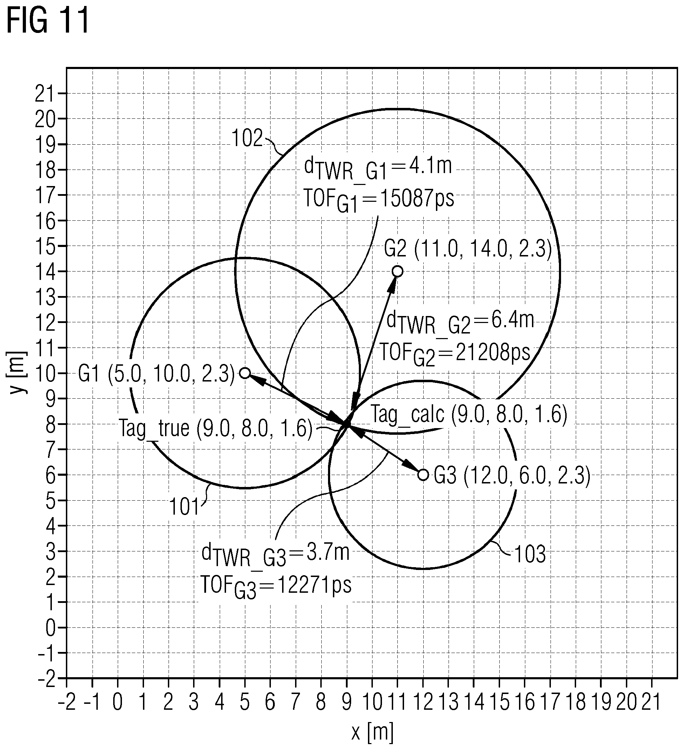

**Fig. 11** zeigt eine Darstellung der Distanzen und der dazugehörigen Laufzeiten gemäß dem Beispiel der Fig. 1, welche in der nachstehenden Tabelle zusammengefasst sind:

Tabelle 1: Distanzen und Laufzeiten der Anker-Transponder

| Gateway-Transponder | $d_{TWR\_Gn}$ [m] | $TOF_{Gn}$ [ps] |
|---|---|---|
| G1 | 4.1 | 15087 |
| G2 | 6.4 | 21208 |
| G3 | 3.7 | 12271 |

Die Distanzen und Laufzeiten sind zueinander proportional.

Aus den Distanzen und Laufzeiten wird von der Rechenvorrichtung F-CPU mithilfe geometrischer Zusammenhänge bewertet, ob Mehrdeutigkeiten möglich sind und der Schutzradius $r_P$ um die Position Tag_calc am Ort $(x_{Tag\_calc}, y_{Tag\_calc}, z_{Tag\_calc})$ berechnet.

$$d_{GW\_Tag\_calc} = \sqrt{\left(x_{Tag\_calc} - x_{GW}\right)^2 + \left(y_{Tag\_calc} - y_{GW}\right)^2 + \left(z_{Tag\_calc} - z_{GW}\right)^2}$$

Durch eine fehlersicher arbeitende Recheneinheit ohne Fehler bestimmte, sichere Distanz zwischen dem Objekt-Transponder und einem Anker-Transponder gilt:

$$d_{TWR} = d_{Tag\_calc}$$

Mit einem Lokalisierungsfehler gilt der Zusammenhang:

$$error_{TWR} = d_{GW\_Tag\_calc} - d_{TWR}$$

Der Schutzradius $r_P$ kann um einen Korrekturwert vergrößert werden, welcher sich aus der Latenz der Distanzmessungen und der maximal definierten Geschwindigkeit des Objekt-Transponders T zusammensetzt.

Zur Bestimmung des Schutzradius $r_P$ wird die Zweiwege-Entfernungsmethode (englisch "two way ranging") herangezogen, welche die Laufzeit eines UWB-HF-Signals bestimmt und dann die Entfernung zwischen den Knoten berechnet, indem die Zeit mit der Lichtgeschwindigkeit multipliziert wird. Der TWR-Prozess wird zwischen dem Objekt-Transponder und dem angeforderten Anker angewendet, es darf zu einem bestimmten Zeitpunkt nur ein Anker am TWR beteiligt sein.

Der Schutzradius $r_p$ für den ungünstigsten Fall kann durch den Zusammenhang

$$r_p = 2 * d_{TWRmin} + delta_{max}$$

von der F-CPU bestimmt werden, mit

$$d_{TWRmin} = \min_{n=1..\#gateways} d_{TWRn}$$

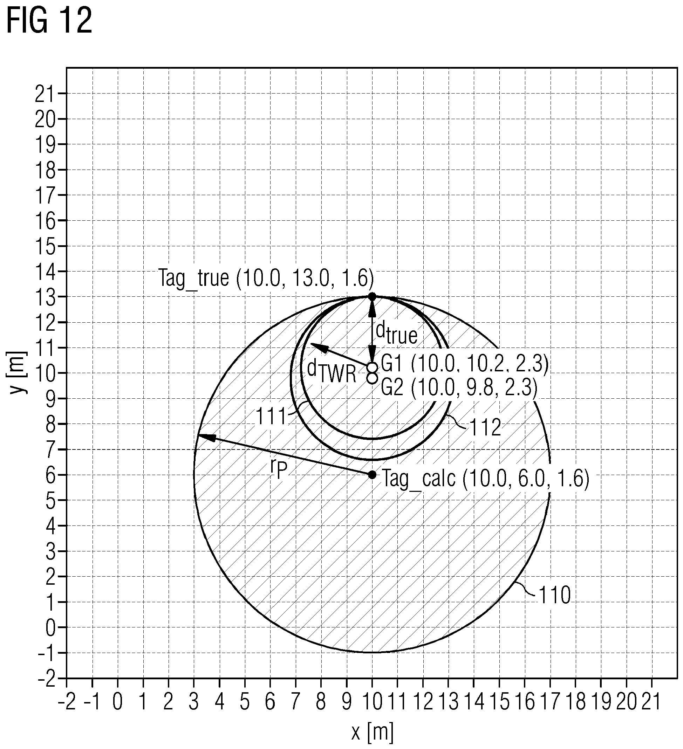

In **Fig. 12** ist der geometrische Zusammenhang dargestellt, welcher in der vorhergehenden Formel berücksichtigt wird, wenn die vom System berechnete Personen-Transponderposition falsch ist. Der berechnete Schutzradius $r_p$ deckt exakt die Fläche um die tatsächliche Personen-Transponderposition Tag_true (10.0, 13.0, 1.6) ab, welche durch den Kreis 110 um die Position Tag_calc (10.0, 6.0, 1.6) angedeutet ist.

Die Distanz $d_{true}$ entspricht der Entfernung der tatsächlichen Personen-Transponderposition Tag_true (10.0, 13.0, 1.6) zur Anker-Position G1 (10.0, 10.2, 2.3).

Die Distanz $d_{TWR}$ entspricht dem Radius des Kreises 111 um die verwendete Anker-Position G1.

Der Kreis 112 hat seinen Mittelpunkt um die verwendete Anker-Position G2 (10.0, 9.8, 2.3).

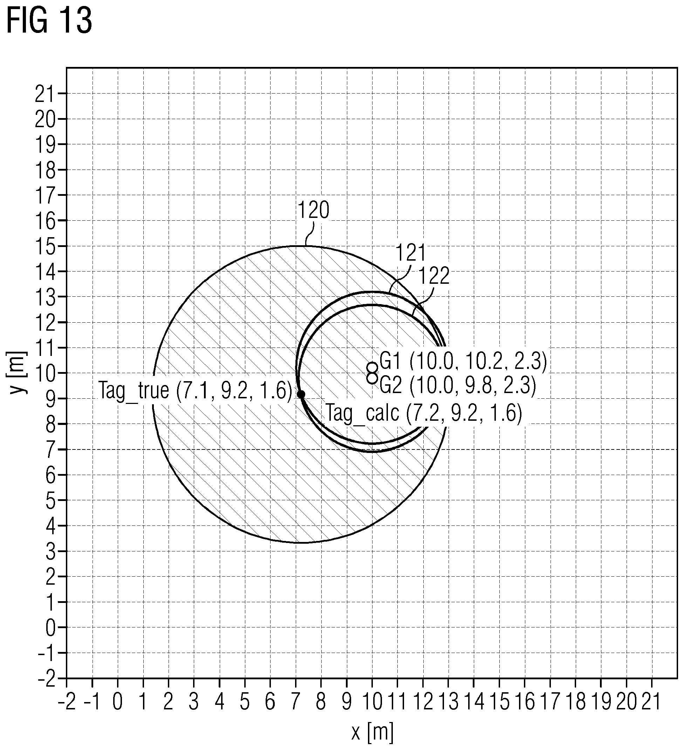

In **Fig. 13** ist der geometrische Zusammenhang dargestellt, welcher in der vorhergehenden Formel berücksichtigt wird, wenn die vom System berechnete Personen-Transponderposition korrekt ist. Der berechnete Schutzradius $r_p$ ist größer als erforderlich und deckt die Fläche um die tatsächliche Personen-Transponderposition ab, welche durch den Kreis 120 um die Position Tag_calc (7.2, 9.1, 1.6) angedeutet ist. Die tatsächliche Position Tag_true (7.1, 9.2, 1.6) liegt knapp neben der berechneten Position Tag_calc.

Der Kreis 121 hat seinen Mittelpunkt um die verwendete Anker-Position G1 (10.0, 10.2, 2.3).

Der Kreis 122 hat seinen Mittelpunkt um die verwendete Anker-Position G2 (10.0, 9.8, 2.3).

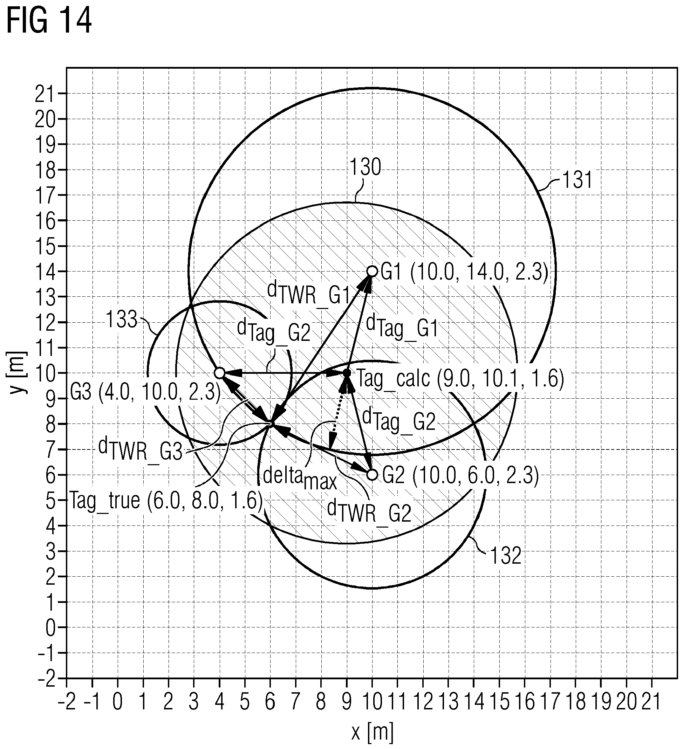

**Fig. 14** zeigt anhand eines Beispiels den geometrischen Zusammenhang von Distanzen bei der Bestimmung des Schutzradius $r_p$. Es wird dabei eine maximale Distanz delta$_{max}$ durch die Rechenvorrichtung F-CPU berechnet.

$$delta_{max} = max_{n=1..\#gateways} \left| d_{GWn\_Tag\_calc} - d_{GWn\_TWR} \right|$$

Bei einer tatsächlichen Position Tag_true (6.0, 8.0, 1.6), Gateway Positionen G1 (10.0, 14.0, 2.3), G2 (10.0, 6.0, 2.3) und G3 (4.0, 10.0, 2.3), sowie der ermittelten Position Tag_calc (9.0, 10.1, 1.6) können die entsprechenden Distanzen ermittelt werden.

$$delta_{G1} = delta_{Tag\_G1} - d_{TWR\_G1}$$

$$delta_{G2} = delta_{Tag\_G2} - d_{TWR\_G2}$$

$$delta_{G3} = delta_{Tag\_G3} - d_{TWR\_G3}$$

Damit ergibt sich für diese Beispiel

$$delta_{max} = delta_{G1}$$

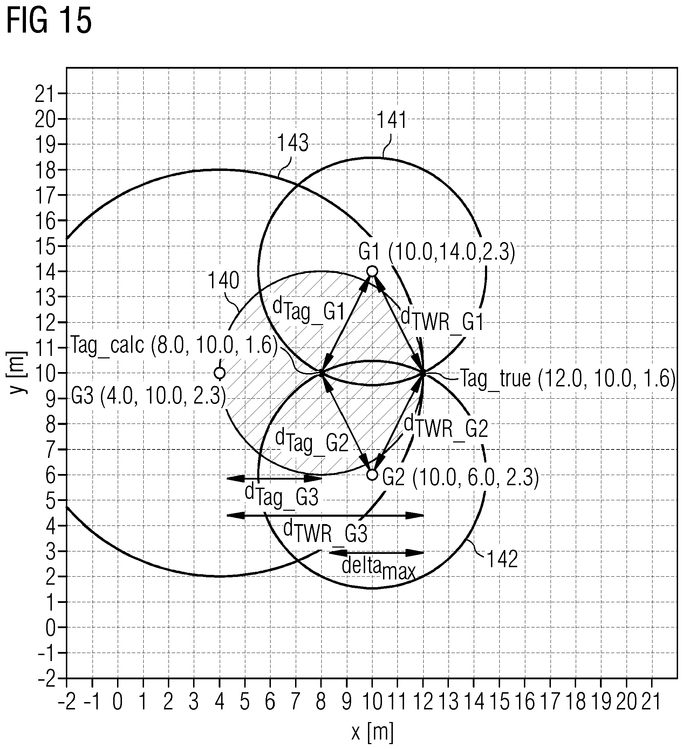

**Fig. 15** zeigt anhand eines weiteren Beispiels den geometrischen Zusammenhang von Distanzen bei der Bestimmung des Schutzradius $r_p$. Es wird dabei eine maximale Distanz delta$_{max}$ durch die Rechenvorrichtung F-CPU berechnet.

$$delta_{max} = max_{n=1..\#gateways} \left| d_{GWn\_Tag\_calc} - d_{GWn\_TWR} \right|$$

Bei einer tatsächlichen Position Tag_true (12.0, 10.0, 1.6), Gateway Positionen G1 (10.0, 14.0, 2.3), G2 (10.0, 6.0, 2.3) und G3 (4.0, 10.0, 2.3), sowie der ermittelten Position Tag_calc (8.0, 10.0, 1.6) können die entsprechenden Distanzen ermittelt werden.

$$delta_{G1} = delta_{Tag\_G1} - d_{TWR\_G1}$$

$$delta_{G2} = delta_{Tag\_G2} - d_{TWR\_G2}$$

$$delta_{G3} = delta_{Tag\_G3} - d_{TWR\_G3}$$

Damit ergibt sich für diese Beispiel

$$delta_{max} = delta_{G3}$$

Der Schutzradius $r_p$ ist als Kreis 140 erkennbar.

Die gemessenen Distanzen zwischen dem Objekt-Transponder T und den Gateways G1-G3 sind als Kreise 141-143 um die Gateways G1-G3 dargestellt

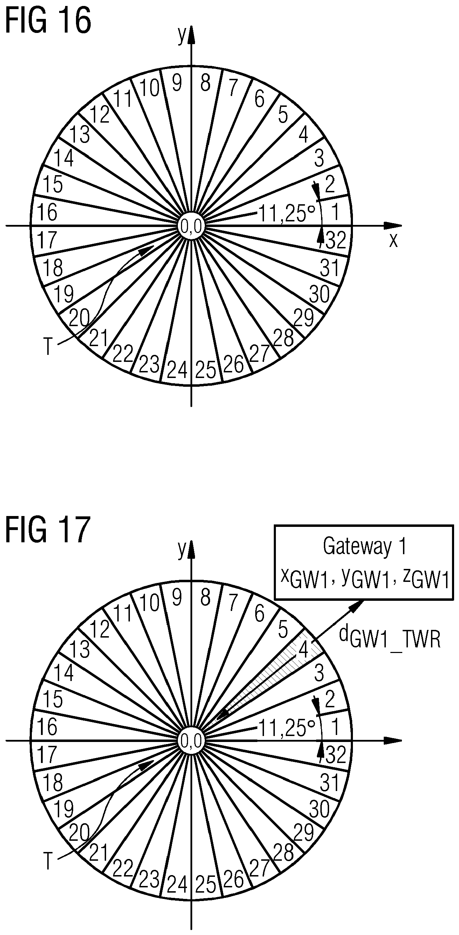

**Fig. 16** stellt anhand eines Beispiels Sektoren dar, welche um einen Objekt-Transponder T an der Position $(x_{Tag\_calc}, y_{Tag\_calc}, z_{Tag\_calc})$ als relativer Ursprung (0, 0) festgelegt werden können, beispielsweise mit einer Winkelauflösung von 11.25°, wodurch ein Kreis in 32 gleich große Segmente beziehungsweise Sektoren unterteilt wird. Allgemein kann die Anzahl an Sektoren jedoch N betragen.

Die Anwendung von Sektoren ist ein einfaches Verfahren zur Feststellung, ob der Transponder T innerhalb des Dreiecks befindet, welches durch die Anker-Gateways G1-G3 aufgespannt wird, oder nicht. Dies ist insbesondere bei der Verwendung einer kostengünstigen, jedoch leistungsschwachen fehlersicheren Rechenvorrichtung F-CPU vorteilhaft, welche über eine reduzierte Instruktionsmenge verfügen kann.

Die Rechenvorrichtung F-CPU berechnet einen maximalen Zähler für freie, aufeinanderfolgende Sektoren $FCS_{max}$ (englisch "Free Consecutive Sector count"), sowie die relevanten Sektoren, welche berücksichtigt werden, um die Berechnung des Schutzradius $r_p$ zu optimieren.

Der schlechteste Fall für eine Ermittlung des Schutzradius $r_p$ kann durch Nebeneffekte der UWB-Technologie zu einem unerwarteten Ausschalten führen. Durch Verwendung jener Gateways, welche im Sinne einer bestmöglichen geometrischen Anordnung am besten passen, reduziert die Wahrscheinlichkeit von falsch bestimmten Distanzen und Richtungen.

Der Parameter $FCS_{max}$ beschreibt die geometrische Situation durch eine entsprechende Anordnung mit gemessenen Distanzen zwischen verschiedenen Kombinationen von Gateways und dem Objekt-Transponder, zu dessen Bestimmung es notwendig ist, die Sektoren zu bestimmen, in welchen die Gateways angeordnet sind.

**Fig. 17** zeigt beispielhaft die für das Gateway G1 an Position $(x_{GW1}, y_{GW1}, z_{GW1})$ ermittelte Richtung im Sektor 4, ausgehend vom Objekt-Transponder T gemäß der vorhergehenden Figur, und die dazugehörige Distanz $d_{GW1\_TWR}$.

Im gezeigten Beispiel ist $FCS_{max} = 31$ und die geometrische Situation ist schlecht.

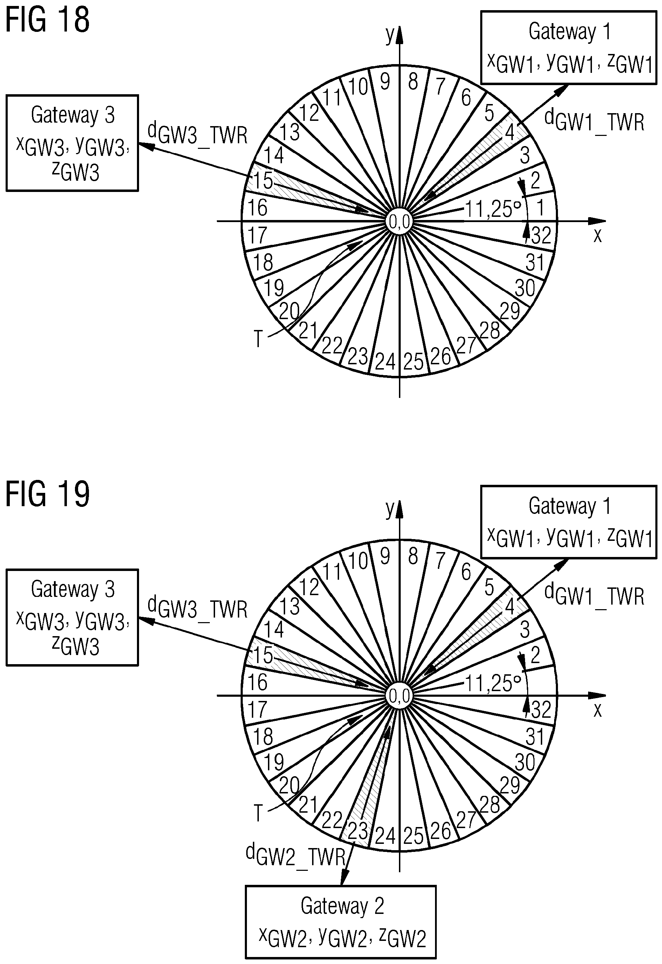

**Fig. 18** ergänzt das vorhergehende Beispiel um die für das Gateway G3 an Position $(x_{GW3}, y_{GW3}, z_{GW3})$ ermittelte Richtung im Segment 15, sowie die dazugehörige Distanz $d_{GW3\_TWR}$.

Im gezeigten Beispiel ist $FCS_{GW1\_GW3} = 10$ und $FCS_{GW3\_GW1} = 20$, womit $FCS_{max} = 20$. Die geometrische Situation ist etwas besser als mit einem Gateway.

**Fig. 19** ergänzt das vorhergehende Beispiel um die für das Gateway G2 an Position $(x_{GW2}, y_{GW2}, z_{GW2})$ ermittelte Richtung im Segment 23, sowie die dazugehörige Distanz $d_{GW2\_TWR}$.

Im gezeigten Beispiel ist $FCS_{GW1\_GW3} = 10$, $FCS_{GW3\_GW2} = 7$ und $FCS_{GW2\_GW1} = 12$, womit $FCS_{max} = 12$. Die geometrische Situation ist besser als mit zwei Gateways.

Jene Gateways, welche $FCS_{max}$ definieren werden zur Berechnung des Schutzradius $r_p$ herangezogen.

In diesem Beispiel legen die Gateways G1 und G2 $FCS_{max}$ fest.

$$\Delta x_{GWn} = x_{GWn} - x_{Tag\_calc}$$

$$\Delta y_{GWn} = y_{GWn} - y_{Tag\_calc}$$

Die Parameter $x_{GWn}$ und $x_{Tag\_calc}$ werden bei der Sektor-Bestimmung nicht verwendet.

Der Schutzradius $r_p$ kann nun durch die Rechenvorrichtung F-CPU für

- $FCS_{max} \geq N/2$, in diesem Beispiel $FCS_{max} \geq 16$ bei 32 Segmenten, d.h. 180°

gemäß dem Zusammenhang

$$r_p = \sqrt{y_{diff}^2 + \left(h_{TWR} + h_{Tag\_calc}\right)^2}$$

berechnet werden.

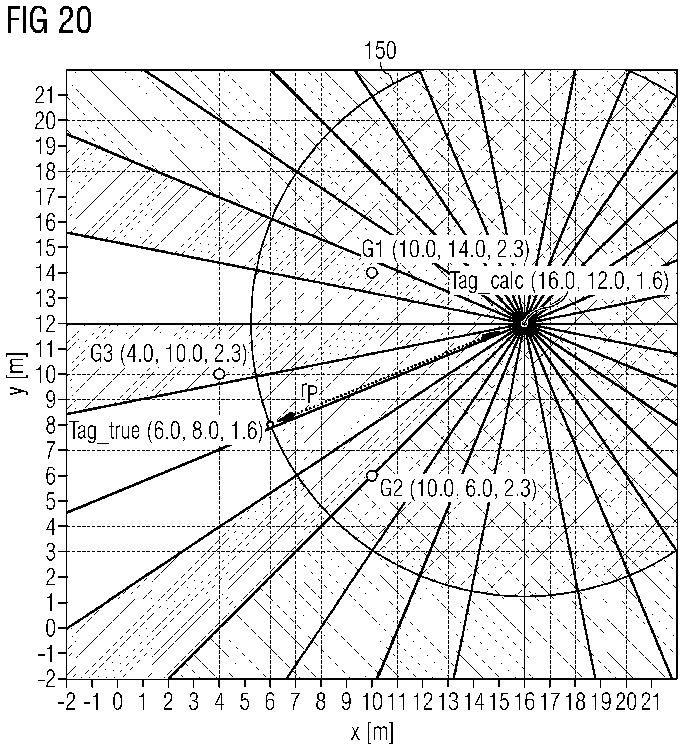

**Fig. 20** zeigt den Objekt-Transponder T an der berechneten Position Tag_calc (16.0, 12.0, 1.6) und an der tatsächlichen Position (6.0, 8.0, 1.6), sowie das Gateway G1 an der Position (10.0, 14.0, 2.3), das Gateway G2 an der Position (10.0, 6.0, 2.3) und das Gateway G3 an der Position (4.0, 10.0, 2.3) in einer Konfiguration, welche zu einem $FCS_{max} = 26$ führt.

In diesem Fall sind alle Gateways G1-G3 links von dem Objekt-Transponder T angeordnet, was zu einer schlechten geometrischen Situation der Distanzen zwischen Objekt-Transponder T und den Gateways G1-G3 führt.

Der Schutzradius $r_p$ ist als Kreis 150 erkennbar.

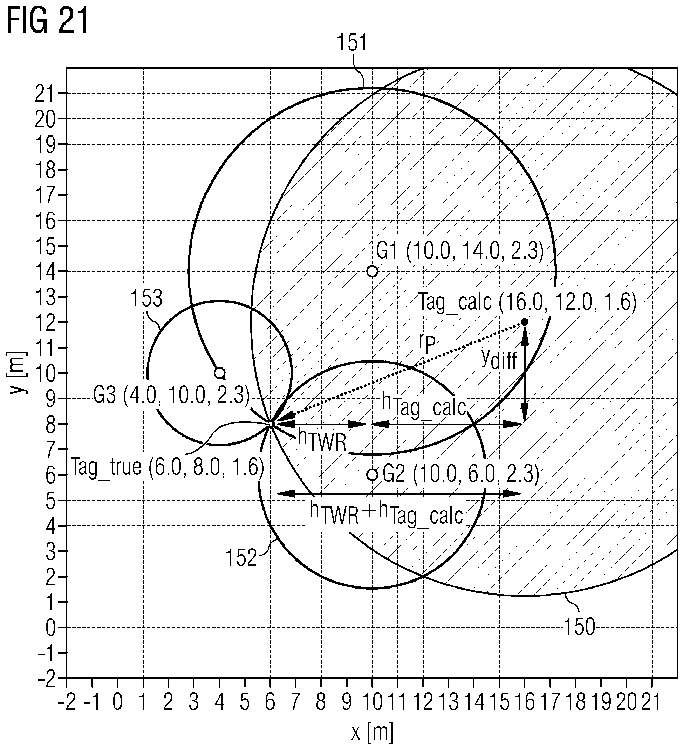

**Fig. 21** stellt den geometrischen Zusammenhang aus der vorhergehenden Formel dar. Die gemessenen Distanzen zwischen dem Objekt-Transponder T und den Gateways G1-G3 sind als Kreise 151-153 um die Gateways G1-G3 dargestellt, welche zu einem Schnittpunkt bezüglich der tatsächlichen Objekt-Transponderposition Tag_true führen.

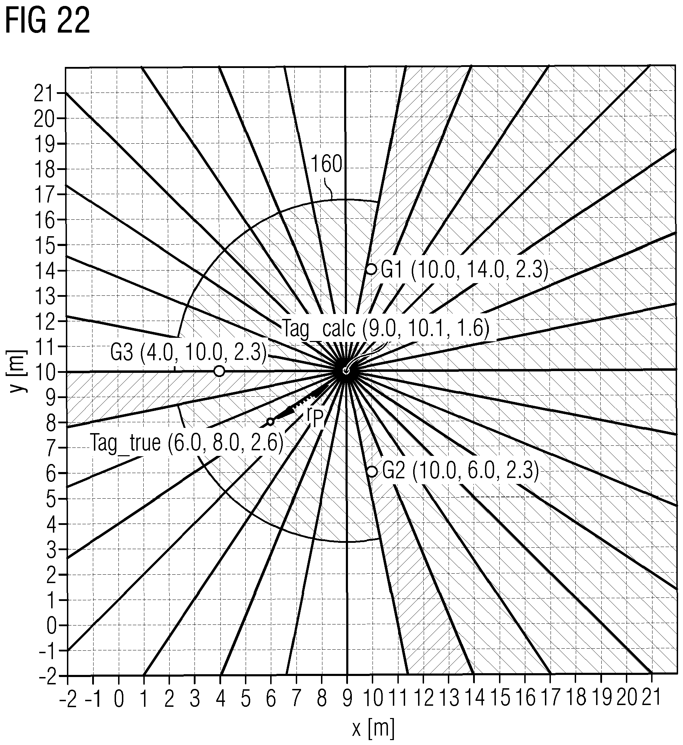

In **Fig. 22** ist eine Anordnung mit einem Objekt-Transponder T, welcher etwa mittig zwischen den Gateways G1-G3 angeordnet ist, gezeigt, was zu einer günstigen geometrischen Situation der Distanzen zwischen dem Objekt-Transponder T und den Gateways G1-G3 führt.

Die Figur zeigt den Objekt-Transponder T an der berechneten Position Tag_calc (9.0, 10.2, 1.6) und an der tatsächlichen Position Tag_true (6.0, 8.0, 2.6), sowie das Gateway G1 an der Position (10.0, 14.0, 2.3), das Gateway G2 an der Position (10.0, 6.0, 2.3) und das Gateway G3 an der Position (4.0, 10.0, 2.3).

Die in diesem Beispiel gewählte Konfiguration führt zu einem $FCS_{max} = 12$.

Der Schutzradius $r_p$ kann, im Unterschied zur vorher genannten Formel, durch die Rechenvorrichtung F-CPU für

- $FCS_{max} < N/2$, in diesem Beispiel $FCS_{max} < 16$ bei 32 Segmenten, d.h. 180°, sowie
- $h_{Tag\_calc} \cdot 0.7 < delta_{max}$

jedoch gemäß dem Zusammenhang

$$r_p = \sqrt{y_{diff}^2 + \left(h_{TWR} - h_{Tag\_calc}\right)^2} + delta_{max}$$

berechnet werden.

Der Schutzradius $r_p$ ist als Kreis 160 erkennbar.

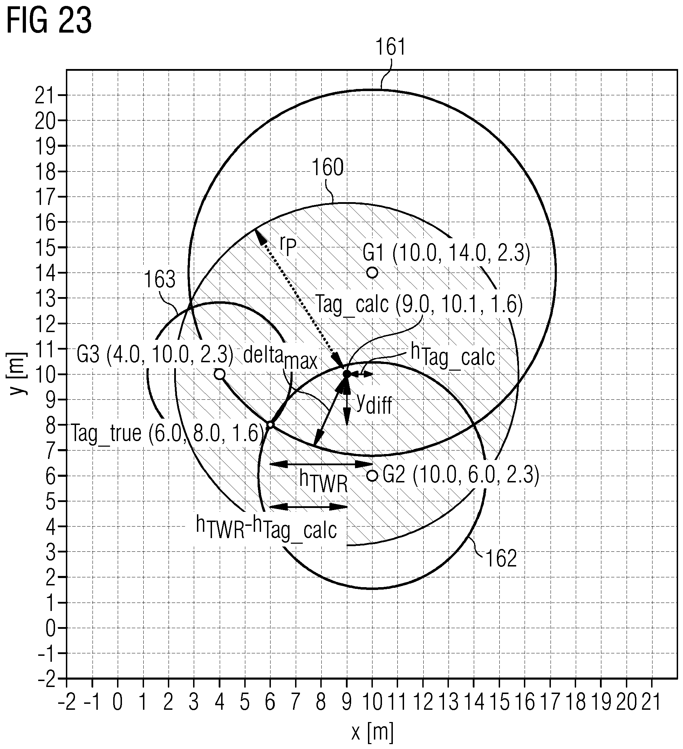

**Fig. 23** stellt den geometrischen Zusammenhang nach der vorhergehenden Formel dar. Die gemessenen Distanzen zwischen dem Objekt-Transponder T und den Gateways G1-G3 sind als Kreise 161-163 um die Gateways G1-G3 dargestellt, welche zu einem Schnittpunkt bezüglich der tatsächlichen Objekt-Transponderposition Tag_true führen.

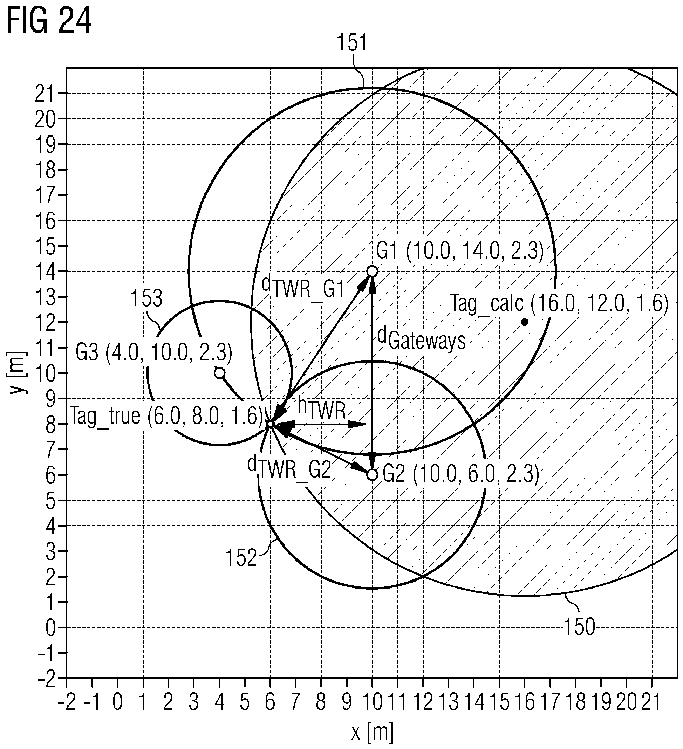

**Fig. 24** stellt den geometrischen Zusammenhang für Abstände einer Anordnung analog zu Fig. 18 und Fig. 19 dar.

Dabei berechnet die Rechenvorrichtung F-CPU die Abstände $h_{TWR}$ und $h_{Tag\_calc}$ gemäß den mathematischen Zusammenhängen:

$$d_{Gateways} = \sqrt{(x_{G1} - x_{G2})^2 + (y_{G1} - y_{G2})^2}$$

$$h_{TWR} = d_{TWR\_G1}^2 - \frac{(d_{Gateways}^2 - d_{TWR_{G2}}^2 + d_{TWR_{G1}}^2)^2}{4 \cdot d_{Gateways}^2}$$

In diesem Beispiel ergibt sich daher:

$$d_{Tag\_G1} = \sqrt{\left(x_{G1} - x_{Tag\_calc}\right)^2 + \left(y_{G1} - y_{Tag\_calc}\right)^2}$$

$$d_{Tag\_G2} = \sqrt{\left(x_{G2} - x_{Tag\_calc}\right)^2 + \left(y_{G2} - y_{Tag\_calc}\right)^2}$$

$$h_{Tag\_calc} = d_{Tag\_G1}^2 - \frac{(d_{Gateways}^2 - d_{Tag_{G2}}^2 + d_{Tag_{G1}}^2)^2}{4 \cdot d_{Gateways}^2}$$

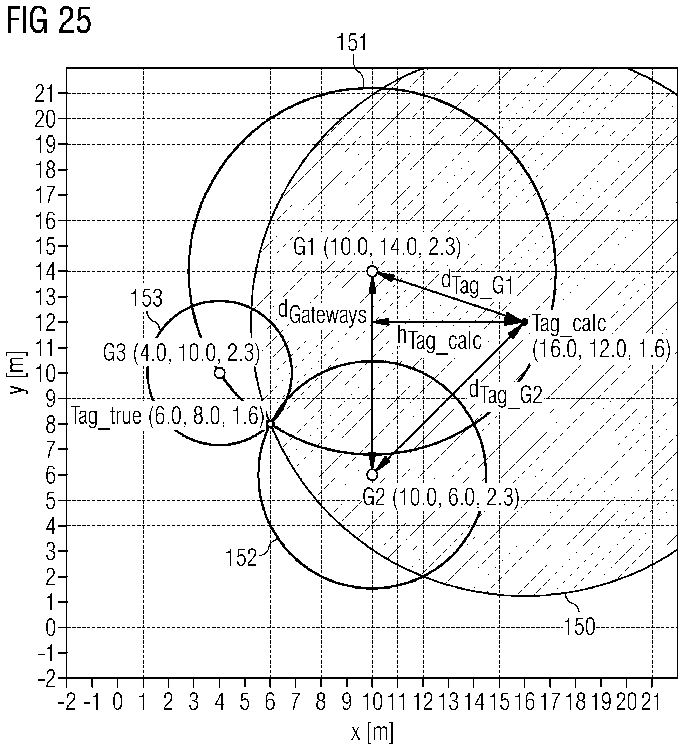

**Fig. 25** stellt den geometrischen Zusammenhang für die zuvor genannte Formel dar, um den Abstand $h_{Tag\_calc}$ zu bestimmen.

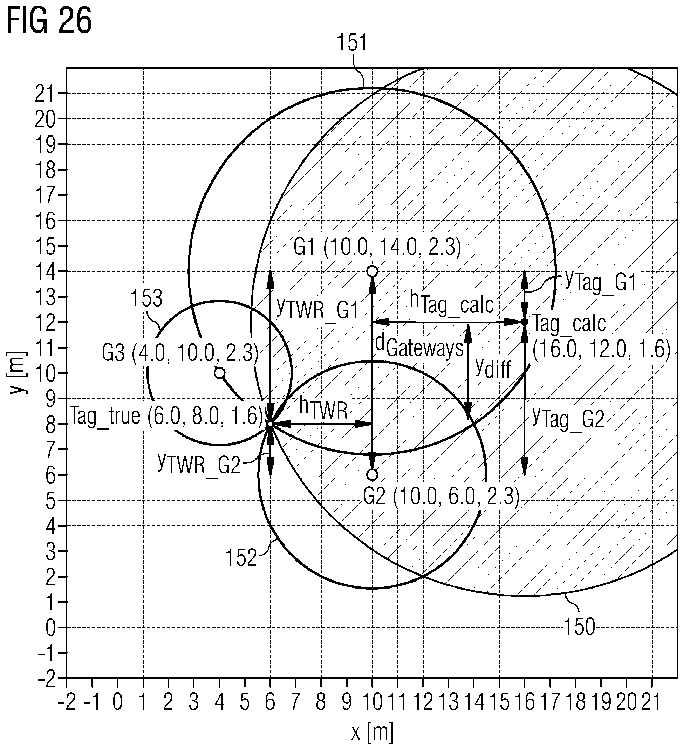

**Fig. 26** stellt den geometrischen Zusammenhang für den Abstand $y_{diff}$ dar, welcher von der Rechenvorrichtung F-CPU bestimmt wird.

Die Gateways sind an den Positionen G1 (10.0, 14.0, 2.3), G2 (10.0, 6.0, 2.3) und G3 (4.0, 10.0, 2.3) angeordnet.

Der Objekt-Transponder ist an der tatsächlichen Position Tag_true (6.0, 8.0, 1.6) und der ermittelten Position Tag_calc (16.0, 12.0, 1.6) angeordnet.

Dazu werden die mathematischen Zusammenhänge bestimmt:

$$d_{Gateways} = \sqrt{(x_{G1} - x_{G2})^2 + (y_{G1} - y_{G2})^2}$$

$$y_{Tag\_G1} = \sqrt{d_{Tag\_G1}^2 - h_{Tag\_calc}^2}$$

$$y_{Tag\_G1} = \sqrt{d_{Tag\_G2}^2 - h_{Tag\_calc}^2}$$

$$y_{TWR\_G1} = \sqrt{d_{TWR\_G1}^2 - h_{TWR}^2}$$

$$y_{TWR\_G2} = \sqrt{d_{TWR\_G2}^2 - h_{TWR}^2}$$

Solange alle Bedingungen gelten:

$$y_{TWR\_G1} < d_{Gateways}$$

$$y_{TWR\_G2} < d_{Gateways}$$

$$y_{Tag\_G1} < d_{Gateways}$$

$$y_{Tag\_G2} < d_{Gateways}$$

Gilt der Zusammenhang:

$$y_{diff} = y_{TWR\_G1} - y_{Tag\_G1}$$

Ansonsten wird der Schutzradius $r_p$ bestimmt durch:

$$r_p = 2 * d_{TWR} + delta_{max}$$

Die Figur stellt den geometrischen Zusammenhang für den Abstand $y_{diff}$ dar, wenn

$$y_{Tag\_G2} > d_{Gateways}$$

$$y_{TWR\_G2} > d_{Gateways}$$

Der Schutzradius $r_p$ ist als Kreis 150 erkennbar.

Die gemessenen Distanzen zwischen dem Objekt-Transponder T und den Gateways G1-G3 sind als Kreise 151-153 um die Gateways G1-G3 dargestellt

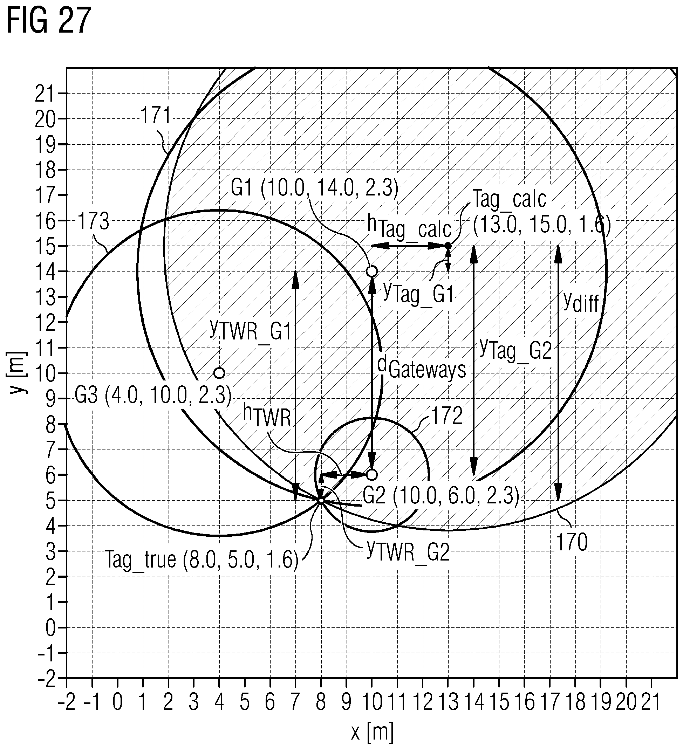

**Fig. 27** stellt für die Anordnung der vorhergehenden Figur den geometrischen Zusammenhang für den Schutz-

radius $r_p$ dar, wenn

$$y_{Tag\_G2} > d_{Gateways}$$

$$y_{TWR\_G1} > d_{Gateways}$$

Der Schutzradius $r_p$ ist als Kreis 170 erkennbar.

Die gemessenen Distanzen zwischen dem Objekt-Transponder T und den Gateways G1-G3 sind als Kreise 171-173 um die Gateways G1-G3 dargestellt

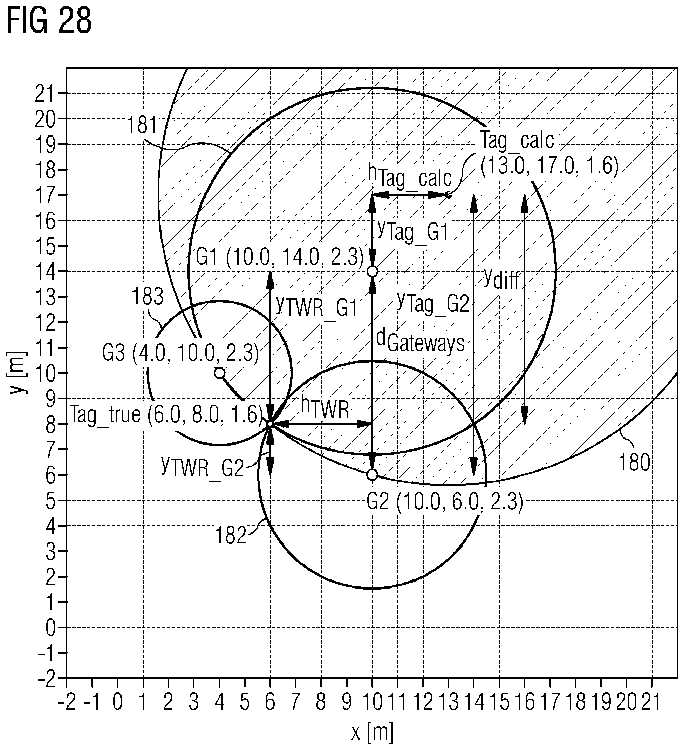

**Fig. 28** stellt den geometrischen Zusammenhang für den Schutzradius $r_p$ dar, wenn

$$y_{Tag\_G2} > d_{Gateways}$$

$$y_{TWR\_G2} < d_{Gateways}$$

Der Schutzradius $r_p$ ist als Kreis 180 erkennbar.

Die gemessenen Distanzen zwischen dem Objekt-Transponder T und den Gateways G1-G3 sind als Kreise 181-183 um die Gateways G1-G3 dargestellt

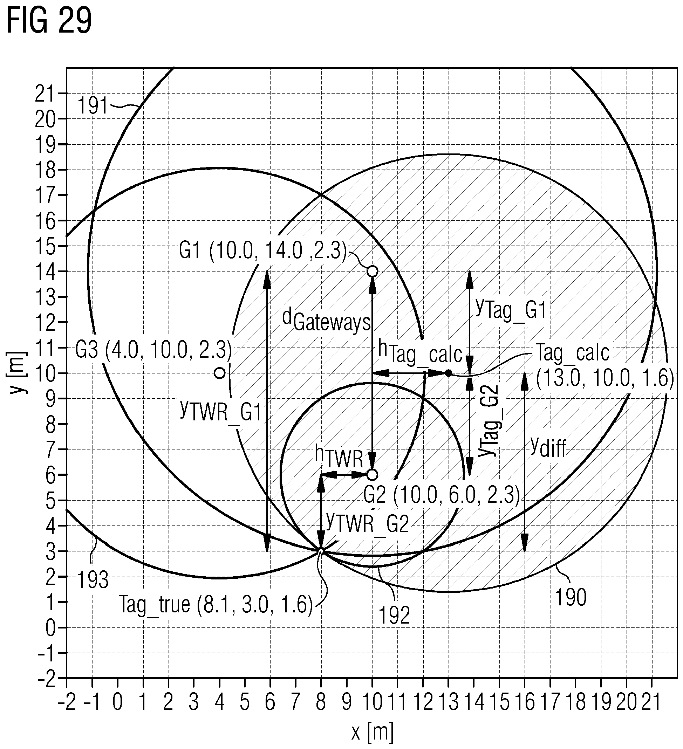

**Fig. 29** stellt den geometrischen Zusammenhang für den Schutzradius $r_p$ dar, wenn

$$y_{Tag\_G2} < d_{Gateways}$$

$$y_{TWR\_G1} < d_{Gateways}$$

Der Schutzradius $r_p$ ist als Kreis 190 erkennbar.

Die gemessenen Distanzen zwischen dem Objekt-Transponder T und den Gateways G1-G3 sind als Kreise 191-193 um die Gateways G1-G3 dargestellt

Die Rechenvorrichtung F-CPU kann nun den Schutzradius $r_p$ gemäß dem folgenden Zusammenhang korrigieren:

$$r_p{}' = r_p + v_{maxTag} \cdot \Delta t$$

Wobei $\Delta t$ die Zeitdifferenz zur letzten erfolgreichen Durchführung einer Latenz-Überwachung, sowie der sicheren Berechnung von Distanz und Schutzradius $r_p$ ist.

Beispielsweise kann die Person P, welche den Objekt-Transponder T bei sich trägt, sich mit einer Geschwindigkeit von $v_{maxTag}$ bewegen, wenn die Zweiwege-Datenerfassung beispielsweise alle 400 ms oder vorzugsweise alle 100 ms erfolgt. Dabei ist der Schutzradius $r_p$ möglicherweise nicht groß genug, um die Position des Objekt-Transponders T abzudecken.

**Bezugszeichenliste:**

| | |
|---|---|
| 1-32 | Kreissegment |
| 100, 110, 120, 130, 140, 150, 160, 170, 180, 190 | Kreis um berechnete Objekt-Transponder-Position |
| 101-103, 111-112, 121-122, 131-133, 141-143, 151-153, 161-163, 171-173, 181-183, 191-193 | Kreis um Gateway |
| 200 | Unsichere Berechnung der Position |
| 210 | Fehlersichere Berechnung der Position |
| 211-213 | fehlersicher berechnete Distanzen |
| 230 | Mehrdeutigkeitsbewertung |
| 240 | Berechnung Schutzradius |
| 250 | Positionskorrektur |

(fortgesetzt)

| | |
|---|---|
| CG | Zähler Anker-Transponder |
| CRC1, CRC2 | Prüfsumme |
| CT | Zähler Objekt-Transponder |
| $delta_{max}$ | maximale Distanzdifferenz |
| $d_{Gn}$, $d_{Gateways}$ | bekannte Distanz der Gateways |
| $d_{true}$ | Distanz zur tatsächlichen Position |
| $d_{TWR}$ | sichere Distanz |
| $d_{TWR\_G1}$, $d_{TWR\_G2}$, $d_{TWR\_G3}$ | TWR-Distanz für Gateway (Radius um Gateway) |
| $d_{GW1\_TWR}$, $d_{GW2\_TWR}$, $d_{GW3\_TWR}$ | Distanz für Gateway mittels TW |
| $d_{Tag\_G1}$, $d_{Tag\_G2}$, $d_{Tag\_G3}$ | Distanz zwischen Objekt-Transponder und Gateway |
| F-CPU | fehlersichere Rechenvorrichtung |
| $FCS_{max}$ | maximaler Zähler für freie, aufeinanderfolgende Sektoren ("Free Consecutive Sector count") |
| F1-F3 | End-Signal |
| G1, G2, G3 | Ankerpunkt, Gateway |
| GS | Gefahrensystem |
| $h_{Tag\_calc}$ | Abstand zum berechneter Objekt-Transponder-Position |
| $h_{TWR}$ | TWR-Abstand |
| M | Übertragungs-Medium, Funkkanal |
| MP, MP_TWR | Abfrage-Nachricht, "Pull" |
| MR, MR_TWR | Antwort-Nachricht, "Response" |
| MF_TWR | End-Nachricht, "Final" |
| MPSN, MRSN, MFSN | fortlaufende Nummer, Sequenznummer |
| MPZA, MRZA, MFZA | Ziel-Adresse |
| MPQA, MRQA, MFQA | Quell-Adresse |
| MPFC, MRFC, MFFC | Funktions-Code |
| MFRXTX, MFTXRX | Zeitdifferenz |
| MF_PTX, MF_RRX, MF_FTX | Zeitpunkt |
| N | Anzahl an Kreis-Sektoren |
| P | Person mit Objekt-Transponder |
| P_F-CPU, P_G, P_T | Verfahren, Programm |
| PF1-PF4 | Verfahrensschritte in der F-CPU |
| PG1-PG3 | Verfahrensschritte im Gateway |
| PT1-PT3 | Verfahrensschritte im Transponder/ Tag |
| P1-P3 | Abfrage-Signal |
| R | Roboter-Arm |
| RNR | Zufallszahl, "random number" |
| $r_P$ | Schutzradius |
| $r_P'$ | korrigierter Schutzradius |
| R1-R3 | Antwort-Signal |
| S | Schutzzone |
| SS | Schutzsystem |
| T | Objekt-Transponder |
| Tag_calc | berechnete Objekt-Transponder-Position |
| Tag_true | tatsächliche Objekt-Transponder-Position |
| TOF, $TOF_{G1}$, $TOF_{G2}$, $TOF_{G3}$ | "Time-of-Flight"- Signallaufzeit |
| $TS_{TAG\_TX\_POLL}$, $TS_{TAG\_RX\_RESP}$, $TS_{TAG\_TX\_FINAL}$, $TS_{GW\_RX\_POLL}$, $TS_{GW\_TX\_RESP}$, $TS_{GW\_RX\_FINAL}$ | Zeitstempel |
| $T_{TAG\_REPLY}$, $T_{TAG\_CLK}$, $T_{GW\_REPLY}$, $T_{GW\_CLK}$, $T_{Round1}$, $T_{Round2}$ | Signallaufzeit |
| TWR | "Two-Way-Ranging"-Verfahren |

(fortgesetzt)

| | |
|---|---|
| WS | Warnsystem |
| x, y | Achse |
| $x_{GW1}$, $x_{GW2}$, $x_{GW3}$ | Gateway x-Koordinate |
| $y_{diff}$ | Abstand in y-Richtung |
| $y_{GW1}$, $y_{GW2}$, $y_{GW3}$ | Gateway y-Koordinate |
| $y_{Tag\_G1}$, $y_{Tag\_G2}$ $y_{TWR\_G1}$, $y_{TWR\_G2}$ $z_{GW1}$, $z_{GW2}$, $z_{GW3}$ | Gateway z-Koordinate |

**Patentansprüche**

1. Verfahren zur Bestimmung einer Schutzzone (S) mit einem Schutzradius ($r_p$) um einen drahtlos kommunizierenden Objekt-Transponder (T), **gekennzeichnet durch** folgende Schritte:

   a) Ermitteln einer ersten, unsicheren Position (Tag_calc) des Objekt-Transponders (T) durch ein erstes Lokalisierungssystem,
   b) Ermitteln von zumindest zwei sicheren Anker-Objekt-Distanzen ($d_{TWR\_G1}$, $d_{TWR\_G2}$, $d_{TWR\_G3}$) zwischen dem Objekt-Transponder (T) und zumindest zwei Anker-Transpondern (G1-G3) mit jeweils bekannter Position nach dem TWR-Prinzip durch eine sichere Distanzmessungsvorrichtung,
   c) Ermitteln des Schutzradius ($r_p$) mittels einer fehlersicheren Rechenvorrichtung (F-CPU), welche die erste Position (Tag_calc) vom ersten Lokalisierungssystem und die zumindest zwei sicheren Anker-Objekt-Distanzen ($d_{TWR\_G1}$, $d_{TWR\_G2}$, $d_{TWR\_G3}$) von der Distanzmessungsvorrichtung empfängt und daraus mithilfe der bekannten Positionen der zumindest zwei Anker-Transponder (G1-G3) den Schutzradius ($r_p$) bestimmt.

2. Verfahren nach dem vorhergehenden Anspruch, wobei von den zumindest zwei Anker-Objekt-Distanzen ($d_{TWR\_G1}$, $d_{TWR\_G2}$, $d_{TWR\_G3}$) das Minimum als minimale Distanz ($d_{TWRmin}$) bestimmt wird,
   und der jeweilige geometrische Abstand zwischen einem Anker-Transponder (G1-G3) und der ersten Position (Tag_calc), sowie der Differenz zu den Anker-Objekt-Distanzen jeweils ermittelt wird, und aus den Differenzen das Maximum als maximale Distanzdifferenz (delta$_{max}$) bestimmt wird,
   und der Schutzradius ($r_p$) aus der minimalen Distanz ($d_{TWRmin}$) und der maximalen Distanzdifferenz (delta$_{max}$) bestimmt wird.

3. Verfahren nach einem der vorhergehenden Ansprüche, wobei der Schutzradius ($r_p$) gemäß dem Zusammenhang

$$r_p = 2 * d_{TWRmin} + delta_{max}$$

bestimmt wird.

4. Verfahren nach einem der vorhergehenden Ansprüche, wobei der Schutzradius ($r_p$) aus dem jeweiligen Abstand zwischen den zumindest zwei Anker-Objekt-Distanzen ($d_{TWR\_G1}$, $d_{TWR\_G2}$, $d_{TWR\_G3}$) und der ersten Position (Tag_calc) ermittelt wird.

5. Verfahren nach dem vorhergehenden Anspruch, wobei um die zumindest zwei Anker-Transponder (G1-G3) zumindest ein erster Schnittpunkt im Abstand der jeweiligen Anker-Objekt-Distanz ($d_{TWR\_G1}$, $d_{TWR\_G2}$, $d_{TWR\_G3}$) gebildet wird,
   und der Schutzradius ($r_p$) durch den größten Abstand von dem zumindest einen ersten Schnittpunkt zur ersten Position (Tag_calc) bestimmt ist.

6. Verfahren nach einem der vorhergehenden Ansprüche, wobei die Positionen der Anker-Transponder (G1-G3) eine Dreiecksfläche in einer Dreiecksebene definiert, und eine gedachte Flächennormale auf die Dreiecksebene durch die erste Position (Tag_calc) des Transponders (T) verläuft, und der Schnittpunkt zwischen der Flächennormale und der Dreiecksebene eine projizierte Transponder-Position darstellt, welche bei der Bestimmung des Schutzradius ($r_p$) verwendet wird,
   und vorzugsweise eine Mehrdeutigkeit bei der Bestimmung des Schnittpunkts des Objekt-Transponders (T) bei zwei Anker-Transpondern (G1-G3) durch eine Prüfung, ob eine ermittelte Position innerhalb der Dreieckfläche gelegen ist, gelöst wird.

**7.** Verfahren nach einem der vorhergehenden Ansprüche, wobei die zumindest zwei sicheren Anker-Objekt-Distanzen ($d_{TWR\_G1}$, $d_{TWR\_G2}$, $d_{TWR\_G3}$) zwischen dem Objekt-Transponder (T) und einem der zumindest zwei Anker-Transponder (G1-G3) mit bekannter Position nach dem TWR-Prinzip durch eine sichere Distanzmessungsvorrichtung ermittelt werden, wobei der Objekt-Transponder (T) sowie das eine Anker-Gateway (G1-G3) jeweils Mittel zur Erfassung von Zeitstempeln aufweisen, und folgende Schritte ausgeführt werden:

a) Erfassen von Sende- und Empfangs-Zeitstempeln ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) für eine jeweilige Kommunikations-Nachricht seitens des Transponders (T) und des einen Anker-Gateways (G1-G3),
b) Übertragen der jeweiligen Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) vom Transponder (T) und dem einen Anker-Gateway (G1-G3) mit zumindest einer jeweiligen Kontrollinformation (CRC1, CRC2) an eine fehlersichere Rechenvorrichtung (F-CPU), wobei die Kontrollinformation (CRC1, CRC2) vorzugsweise eine Paritätsinformation ist
c) Durchführen von zumindest einer Überprüfung durch die fehlersichere Rechenvorrichtung (F-CPU) ausgewählt aus:

c1) Überprüfung der Richtigkeit der jeweiligen Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) anhand der zumindest einen Kontrollinformation (CRC1, CRC2),
c2) Überprüfung der errechneten Zeitdauer für die Bearbeitungszeiten des Transponders (T) und jener des einen Anker-Gateways (G1-G3) anhand bekannter Erfahrungswerte,

d) Bestimmen der sicheren Distanz ($d_{TWR}$) mithilfe der überprüften Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) durch die fehlersichere Rechenvorrichtung (F-CPU).

wobei bei der Erfassung der Zeitstempel ($TS_{TAG\_TX\_POLL}$, $TS_{GW\_RX\_POLL}$, $TS_{GW\_TX\_RESP}$, $TS_{TAG\_RX\_RESP}$, $TS_{TAG\_TX\_FINAL}$, $TS_{GW\_RX\_FINAL}$) Zeitstempel-Fehler nur durch den Transponder (T) oder alternativ nur durch das eine Anker-Gateway (G1-G3) hervorgerufen werden.

**8.** Verfahren nach dem vorhergehenden Anspruch, wobei ein Indikatorwert (safe_twr_value) für eine sichere Distanzmessung durch folgenden Zusammenhang mittels der fehlersicheren Rechenvorrichtung (F-CPU) ermittelt wird, welcher ein Maß für die Sicherheit der berechneten sicheren Distanz ($d_{TWR}$) ist:

$$\text{safe\_twr\_value} = \frac{\left(T_{Round1} - T_{GW\_REPLY}\right) - \left(T_{Round2} - T_{TAG\_REPLY}\right)}{2}$$

wobei

$$T_{Round1} = 2 \cdot TOF + T_{GW\_REPLY}$$

$$T_{Round2} = 2 \cdot TOF + T_{TAG\_REPLY}$$

$$T_{GW\_REPLY} = TS_{GW\_TX\_RESP} - TS_{GW\_RX\_POLL}$$

$$T_{TAG\_REPLY} = TS_{TAG\_TX\_FINAL} - TS_{TAG\_RX\_RESP}$$

**9.** Verfahren nach einem der Ansprüche 7 oder 8, wobei der drahtlosen Kommunikation zwischen dem Objekt-Transponder (T) und dem einen Anker-Gateway (G1-G3) für eine Lokalisierungs-Abfrage eine Abfrage-, eine Antwort- und eine End-Nachricht (MP, MR, MF) versendet und empfangen wird.

**10.** Verfahren nach dem vorhergehenden Anspruch, wobei eine Vorgangsnummer (RNR) von der fehlersicheren Rechenvorrichtung (F-CPU) erzeugt wird, welche mit der Antwort-Nachricht (MR) übertragen wird, wobei die Vorgangsnummer (RNR) vorzugsweise eine Zufallszahl ist.

**11.** Verfahren nach einem der Ansprüche 7 bis 9, wobei bei der Berechnung der Kontrollinformation (CRC1, CRC2) eine Kommunikations-Adresse des Objekt-Transponders (T) oder des zumindest einen Anker-Gateways (G1-G3) berücksichtigt wird.

**12.** Warnsystem zur Bestimmung einer Schutzzone (S) um einen drahtlos kommunizierenden Objekt-Transponder (T), umfassend eine fehlersichere Rechenvorrichtung (F-CPU) mit einem Speicher, ein Lokalisierungssystem und zumindest zwei Anker-Transponder (G1-G3), wobei das Warnsystem (WS) dazu eingerichtet ist, das Verfahren nach einem der vorhergehenden Ansprüche auszuführen, und die Schutzzone (S) für den Objekt-Transponder (T) zu bestimmen.

**13.** Schutzsystem (SS) für eine Person oder ein Objekt, umfassend ein Gefahrensystem (GS) und ein Warnsystem (WS) nach dem vorhergehenden Anspruch mit einem drahtlos kommunizierenden Objekt-Transponder (T), welcher von einer Person (P) getragen wird oder von einem Objekt umfasst ist, wobei das Schutzsystem (SS) dazu eingerichtet ist, wenn sich das Gefahrensystem (GS) in Betrieb befindet, mithilfe der von dem Warnsystem (WS) ermittelten Schutzzone (S) für den Objekt-Transponder (T) für zumindest jenen Teil des Gefahrensystems (GS) einen Abbruchvorgang des Betriebs des Gefahrensystems (GS) auszulösen, dessen Teil in die Schutzzone (S) eingreift.

**14.** Schutzsystem (SS) nach dem vorhergehenden Anspruch, wobei das Gefahrensystem (GS) ein industrielles Produktionssystem mit beweglichen Teilsystemen, wie Montage-Robotern (R) ist.

**15.** Schutzsystem (SS) für ein Fahrzeug, umfassend ein Gefahrensystem und ein Warnsystem (WS) nach Anspruch 12 mit einem drahtlos kommunizierenden Objekt-Transponder (T), welcher von dem Fahrzeug umfasst ist, und welches Fahrzeug eine Fortbewegung ausführt, wobei das Schutzsystem (SS) dazu eingerichtet ist, mithilfe der von dem Warnsystem (WS) ermittelten Schutzzone (S) für den Objekt-Transponder (T) des Fahrzeugs einen Abbruchvorgang der Fortbewegung auszulösen, sofern das Gefahrensystem (GS) in die Schutzzone (S) eingreift.

**16.** Schutzsystem (SS) nach dem vorhergehenden Anspruch, wobei das Gefahrensystem (GS) ein statisches Infrastrukturobjekt, beispielsweise ein Gebäude ist und der Objekt-Transponder (T) von einem Fahrzeug, beispielsweise ein Kraftfahrzeug, oder von einem fliegenden Verkehrsobjekt, beispielsweise ein Hubschrauber oder eine Drohne zur Personen- oder Güterbeförderung, umfasst ist.

FIG 1

WS, SS

FIG 2

## FIG 3

MP_TWR,
MP →

| MPSN | MPZA | MPQA | MPFC |
|------|------|------|------|

## FIG 4

MR_TWR →

| MRSN | MRZA | MRQA | MRFC |
|------|------|------|------|

## FIG 5

MR →

| MRSN | MRZA | MRQA | MRFC | RNR |
|------|------|------|------|-----|

## FIG 6

MF_TWR →

| MFSN | MFZA | MFQA | MFFC | MFRXTX | MFTXRX |
|------|------|------|------|--------|--------|

## FIG 7

MF →

| MFSN | MFZA | MFQA | MFFC | MF_PTX | MF_RRX | MF_FTX | CRC1 |
|------|------|------|------|--------|--------|--------|------|

FIG 8

FIG 9

FIG 10

## FIG 11

FIG 12

FIG 13

FIG 14

# FIG 15

FIG 16

FIG 17

## FIG 18

Gateway 1
$x_{GW1}$, $y_{GW1}$, $z_{GW1}$

Gateway 3
$x_{GW3}$, $y_{GW3}$, $z_{GW3}$

$d_{GW3\_TWR}$

$d_{GW1\_TWR}$

11,25°

## FIG 19

Gateway 1
$x_{GW1}$, $y_{GW1}$, $z_{GW1}$

Gateway 3
$x_{GW3}$, $y_{GW3}$, $z_{GW3}$

$d_{GW3\_TWR}$

$d_{GW1\_TWR}$

11,25°

$d_{GW2\_TWR}$

Gateway 2
$x_{GW2}$, $y_{GW2}$, $z_{GW2}$

## FIG 20

FIG 21

## FIG 22

# FIG 23

FIG 24

## FIG 25

FIG 26

## FIG 27

## FIG 28

## FIG 29

| | Europäisches Patentamt<br>European Patent Office<br>Office européen des brevets | **EUROPÄISCHER RECHERCHENBERICHT** | **Nummer der Anmeldung**<br>EP 19 21 5687 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/310585 A1 (ALIZADEH-SHABDIZ FARSHID [US]) 17. Dezember 2009 (2009-12-17) | 1,4-6,12 | INV.<br>G01S5/02<br>G01S13/87 |
| Y | * Zusammenfassung *<br>* Abbildungen 9, 10 * | 7,9,11, 13-16 | ADD. |
| A | * Absatz [0006] *<br>* Absatz [0012] *<br>* Absatz [0015] - Absatz [0029] *<br>* Absatz [0060] - Absatz [0070] *<br>* Absatz [0091] - Absatz [0097] *<br>----- | 2,3,8,10 | G01S5/14<br>G01S11/02<br>G08B21/02<br>B25J9/16<br>B25J13/08<br>F16P3/14 |
| X | US 2014/038637 A1 (SHEYNBLAT LEONID [US] ET AL) 6. Februar 2014 (2014-02-06) | 1,6,12 | |
| Y | * Zusammenfassung *<br>* Abbildungen 1, 2, 3B, 4E, 5 * | 7,9,11, 13-16 | |
| A | * Absatz [0013] - Absatz [0015] *<br>* Absatz [0027] *<br>* Absatz [0054] *<br>* Absatz [0060] *<br>* Absatz [0088] *<br>* Absatz [0106] - Absatz [0112] *<br>* Ansprüche 2, 15 *<br>----- | 2-5,8,10 | |
| Y | DE 10 2013 104265 A1 (PILZ GMBH & CO KG [DE]) 30. Oktober 2014 (2014-10-30)<br>* Zusammenfassung *<br>* Absatz [0001] - Absatz [0008] *<br>* Absatz [0014] - Absatz [0021] *<br>* Absatz [0058] *<br>----- | 13-16 | **RECHERCHIERTE SACHGEBIETE (IPC)**<br>G01S<br>G08B<br>F16P<br>B25J |

-/--

Der vorliegende Recherchenbericht wurde für alle Patentansprüche erstellt

| Recherchenort | Abschlußdatum der Recherche | Prüfer |
|---|---|---|
| München | 28. Juli 2020 | Haugg, Sabine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

European Patent Office

Office européen des brevets

# EUROPÄISCHER RECHERCHENBERICHT

**Nummer der Anmeldung**

EP 19 21 5687

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | CHEN JIE ET AL: "Application of high precision localization in following service robots", 2019 CHINESE AUTOMATION CONGRESS (CAC), IEEE, 22. November 2019 (2019-11-22), Seiten 3736-3741, XP033712420, DOI: 10.1109/CAC48633.2019.8997373 [gefunden am 2020-02-12] * Seite 3736 - Seite 3739 * ----- | 1-16 | |
| Y | "Information technology -- Real time locating systems (RTLS) -- Part 62: High rate pulse repetition frequency Ultra Wide Band (UWB) air interface", ISO/IEC 24730-62:2013, IEC, 3, RUE DE VAREMBÉ, PO BOX 131, CH-1211 GENEVA 20, SWITZERLAND, 26. August 2013 (2013-08-26), Seiten 1-57, XP082006036, [gefunden am 2013-08-26] | 7,9,11 | |
| A | * Kapitel "Introduction" * * Kapitel 4.3 * * Kapitel 5.3.6 und 5.3.6.2 * * Kapitel 5.6 * * Kapitel 6, 6.1 und 6.1.1 * * Kapitel 8, 8.1, 8.2, 8.2.1 und 8.2.6 * * Annex A.1 * ----- | 8,10 | RECHERCHIERTE SACHGEBIETE (IPC) |
| Y | CN 108 834 071 A (XIAN WEIDE HUITONG IND AUTOMATION CO LTD) 16. November 2018 (2018-11-16) | 7,9,11 | |
| A | * Absatz [0013] - Absatz [0027] * ----- | 8,10 | |
| A | US 2013/286960 A1 (LI YING [US] ET AL) 31. Oktober 2013 (2013-10-31) * Absatz [0186] - Absatz [0188] * ----- | 10,11 | |

Der vorliegende Recherchenbericht wurde für alle Patentansprüche erstellt

| Recherchenort | Abschlußdatum der Recherche | Prüfer |
|---|---|---|
| München | 28. Juli 2020 | Haugg, Sabine |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 19 21 5687

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder
Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

Europäisches
Patentamt

European
Patent Office

Office européen
des brevets

**MANGELNDE EINHEITLICHKEIT
DER ERFINDUNG
ERGÄNZUNGSBLATT B**

**Nummer der Anmeldung**

EP 19 21 5687

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-6, 12-16

   Bestimmung des Schutzradius aus den Anker-Objekt-Distanzen
   ---

2. Ansprüche: 7-11

   Bestimmung der Anker-Objekt-Distanzen
   ---

**ANHANG ZUM EUROPÄISCHEN RECHERCHENBERICHT
ÜBER DIE EUROPÄISCHE PATENTANMELDUNG NR.** EP 19 21 5687

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2020

| Im Recherchenbericht angeführtes Patentdokument | Datum der Veröffentlichung | Mitglied(er) der Patentfamilie | Datum der Veröffentlichung |
|---|---|---|---|
| US 2009310585 A1 | 17-12-2009 | US 2009310585 A1 | 17-12-2009 |
| | | US 2009312035 A1 | 17-12-2009 |
| | | US 2009312036 A1 | 17-12-2009 |
| | | US 2013288708 A1 | 31-10-2013 |
| | | US 2014135033 A1 | 15-05-2014 |
| | | WO 2010005731 A1 | 14-01-2010 |
| US 2014038637 A1 | 06-02-2014 | AT 431563 T | 15-05-2009 |
| | | AT 546750 T | 15-03-2012 |
| | | AU 2003301350 A1 | 04-05-2004 |
| | | BR 0315350 A | 23-08-2005 |
| | | BR 122016010507 B1 | 14-11-2017 |
| | | CA 2501268 A1 | 29-04-2004 |
| | | CN 1705894 A | 07-12-2005 |
| | | CN 101592726 A | 02-12-2009 |
| | | EP 1552323 A2 | 13-07-2005 |
| | | EP 1986017 A2 | 29-10-2008 |
| | | ES 2323776 T3 | 24-07-2009 |
| | | ES 2379740 T3 | 03-05-2012 |
| | | HK 1082547 A1 | 14-05-2010 |
| | | HK 1139462 A1 | 07-12-2012 |
| | | JP 5518914 B2 | 11-06-2014 |
| | | JP 5522645 B2 | 18-06-2014 |
| | | JP 2006504110 A | 02-02-2006 |
| | | JP 2012163564 A | 30-08-2012 |
| | | KR 20050051695 A | 01-06-2005 |
| | | MX PA05003921 A | 17-06-2005 |
| | | RU 2381520 C2 | 10-02-2010 |
| | | RU 2009139282 A | 27-04-2011 |
| | | US 2005192024 A1 | 01-09-2005 |
| | | US 2010203899 A1 | 12-08-2010 |
| | | US 2012115509 A1 | 10-05-2012 |
| | | US 2014038637 A1 | 06-02-2014 |
| | | WO 2004036240 A2 | 29-04-2004 |
| DE 102013104265 A1 | 30-10-2014 | CN 105247268 A | 13-01-2016 |
| | | DE 102013104265 A1 | 30-10-2014 |
| | | EP 2989369 A1 | 02-03-2016 |
| | | HK 1221985 A1 | 16-06-2017 |
| | | JP 6491640 B2 | 27-03-2019 |
| | | JP 2016524544 A | 18-08-2016 |
| | | US 2016040827 A1 | 11-02-2016 |
| | | WO 2014173725 A1 | 30-10-2014 |
| CN 108834071 A | 16-11-2018 | KEINE | |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT
ÜBER DIE EUROPÄISCHE PATENTANMELDUNG NR.**

EP 19 21 5687

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2020

| Im Recherchenbericht angeführtes Patentdokument | Datum der Veröffentlichung | Mitglied(er) der Patentfamilie | | Datum der Veröffentlichung |
|---|---|---|---|---|
| US 2013286960 A1 | 31-10-2013 | CN | 104620551 A | 13-05-2015 |
| | | CN | 109889246 A | 14-06-2019 |
| | | EP | 2845356 A1 | 11-03-2015 |
| | | JP | 6313282 B2 | 18-04-2018 |
| | | JP | 2015523757 A | 13-08-2015 |
| | | KR | 20150015447 A | 10-02-2015 |
| | | US | 2013286960 A1 | 31-10-2013 |
| | | WO | 2013165149 A1 | 07-11-2013 |

EPO FORM P0461

Für nähere Einzelheiten zu diesem Anhang : siehe Amtsblatt des Europäischen Patentamts, Nr.12/82

Seite 2 von 2